# EUROPÄISCHE PATENTSCHRIFT

(11) **EP 1 812 858 B1**
(45) Veröffentlichungstag und Bekanntmachung des Hinweises auf die Patenterteilung: **03.09.2008**
(21) Anmeldenummer: 05801574.4
(22) Anmeldetag: 25.10.2005
(51) Int. Cl.: G06F 11/16, G06F 11/00

(54) **VERFAHREN UND VORRICHTUNG ZUR ERZEUGUNG EINES MODUSSIGNALS BEI EINEM RECHNERSYSTEM MIT MEHREREN KOMPONENTEN**
METHOD AND DEVICE FOR GENERATING A MODE SIGNAL IN A COMPUTER SYSTEM COMPRISING A PLURALITY OF COMPONENTS
PROCEDE ET DISPOSITIF DE PRODUCTION D'UN SIGNAL DANS UN SYSTEME D'ORDINATEUR A PLUSIEURS COMPOSANTS

(30) Priorität: 25.10.2004 DE 102004051950; 25.10.2004 DE 102004051992; 25.10.2004 DE 102004051964; 25.10.2004 DE 102004051937; 25.10.2004 DE 102004051952; 08.08.2005 DE 102005037261
(43) Veröffentlichungstag der Anmeldung: 01.08.2007
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); ANGERBAUER, Ralf, 71701 Schwieberdingen (DE); COLLANI, Yorck, 71717 Beilstein (DE); GMEHLICH, Rainer, 71254 Ditzingen (DE); BOEHL, Eberhard, 72768 Reutlingen (DE); KOTTKE, Thomas, 71139 Ehningen (DE)
(86) Internationale Anmeldenummer: PCT/EP2005/055502
(87) Internationale Veröffentlichungsnummer: WO 2006/045776

(56) Entgegenhaltungen:
- EP-A- 0 201 356
- EP-A- 0 272 036
- US-A- 3 783 250
- US-A- 3 864 670
- US-A- 4 823 256
- US-B1- 6 269 478
- US-B1- 6 615 366

## Beschreibung

### Stand der Technik

Transiente Fehler, ausgelöst durch Alpha-Teilchen oder kosmische Strahlung, werden zunehmend ein Problem für integrierte Halbleiterschaltungen. Durch abnehmende Strukturbreiten, sinkende Spannungen und höhere Taktfrequenzen nimmt die Wahrscheinlichkeit zu, dass eine Spannungsspitze, hervorgerufen durch ein Alpha-Teilchen oder kosmische Strahlung, einen logischen Wert in einer integrierten Schaltung verfälscht. Ein falsches Berechnungsresultat kann die Folge sein. In sicherheitsrelevanten Systemen, insbesondere im Kraftfahrzeug, müssen solche Fehler daher zuverlässig detektiert werden.
Bei sicherheitsrelevanten Systemen, wie z.B. einem ABS-Regelsystem in einem Kraftfahrzeug, in denen Fehlfunktionen der Elektronik sicher detektiert werden müssen, werden bei den entsprechenden Steuereinrichtungen solcher Systeme üblicherweise Redundanzen zur Fehlererkennung eingesetzt. So ist beispielsweise in bekannten ABS-Systemen jeweils der komplette Mikrocontroller dupliziert, wobei die gesamten ABS-Funktionen redundant berechnet und auf Übereinstimmung geprüft werden. Tritt eine Diskrepanz der Ergebnisse auf, so wird das ABS-System abgeschaltet.
Wesentliche Komponenten eines Mikrocontroller sind einerseits aus Speichermodule (z.B. RAM, ROM, Cache), der Cors und die Ein- /Ausgangs-Schnittstellen, die so genannten Peripherals (z.B. A/D-Wandler, CAN-Schittstelle). Da Speicherelemente mit Prüfcodes (Parity oder ECC) effektiv überwacht werden können, und Peripherals oft anwendungsspezifisch als Teil eines Sensor- oder Aktor-Signalpfades überwacht werden, besteht ein weiterer Redundanzansatz in der alleinigen Verdopplung der Cores eines Mikrocontrollers.

Solche Mikrocontroller mit zwei integrierten Cores sind auch als Dual-Core Architekturen bekannt. Beide Cores führen redundant und taktsynchron (Lockstep-Modus) das gleiche Programmsegment aus, die Ergebnisse der beiden Cores werden verglichen, und ein Fehler wird dann bei dem Vergleich auf Übereinstimmung erkannt werden. Diese Konfiguration eines Dual-Core Systems kann als ein Vergleichsmodus bezeichnet werden.
Dual-Core Architekturen werden in anderen Anwendungen auch zur Leistungssteigerung, also zu einer Performanz-Steigerung eingesetzt. Beide Cores führen unterschiedliche Programme, Programmsegmente und Befehle aus, wodurch sich eine Leistungssteigerung erzielen lässt, weshalb diese Konfiguration eines Dual-Core Systems als einPerformanzmodus bezeichnet werden kann. Dieses System wird auch als ein symmetrisches Multiprozessorsystem (SMP) bezeichnet.
Eine Erweiterung dieser Systeme ist eine Umschaltung durch Software zwischen diesen beiden Modi mittel eines Zugriffs auf eine spezielle Adresse und spezialisierter Hardware-Vorrichtungen. Im Vergleichsmodus werden die Ausgangsignale der Cores miteinander verglichen. Im Performanzmodus arbeiten die beiden Cores als ein symmetrisches Mehrprozessorsystem (SMP) und führen unterschiedliche Programme, Programmsegmente oder Befehle aus.
Vorteilhafterweise können solche Systeme eingesetzt werden, wenn der Modus, in dem sich das System befindet, bekannt ist. Deshalb ist es Aufgabe der Erfindung, Verfahren und Mittel zur Verfügung zu stellen, die es ermöglichen, ein solches Modus-Signal zu erzeugen.

Dokument D1 = US- 6 615 366 offenbart ein Verfahren sowie eine Vorrichtung zur Erzeugung eines Signales bei einem Rechnersystem mit mehreren Komponenten, wobei wenigstens zwei Ausführungseinheitenals zwei Komponenten vorgesehen sind und als weitere Komponente ein Umschaltmittel vorgesehen ist. D1 offenbart auch, dass zwischen zwei Betriebsmodi, nämlich einen Performanzmodus (HP-modus) und einen Redundanzmodus oder Vergleichsmodus (HR-modus), umgeschaltet wird, wobei im Vergleichsmodus den gleichen Programmcode abarbeitet wird. Es werden auch mit CSB und PSB zwei Bits offenbart, die den verschiedenen Ausfuhrungseinheiten signalisiert, ob sie im Vergleichsmodus oder Performanzmodus arbeiten sollen. Es erfolgt jedoch keine Verknüpfung mit irgendeiner Hardware die sicherstelit, ob die einzelnen Rechnerkerne tatsachlich in diesem Modus arbeiten.

### Vorteile der Erfindung

Vorteilhafterweise verwendet man ein Verfahren zur Erzeugung eines Signals bei einem Rechnersystem mit mehreren Komponenten, wobei wenigstens zwei Ausführungseinheiten als zwei Komponenten vorgesehen sind und als weitere Komponente ein Umschaltmittel vorgesehen ist, wobei bei dem Rechnersystem zwischen wenigstens zwei Betriebsmodi umgeschaltet wird und ein erster Betriebsmodus einem Vergleichsmodus und ein zweiter Betriebsmodus einem Performanzmodus entspricht, **dadurch gekennzeichnet, dass** durch die Umschaltmittel im Performancemodus die Ausführungseinheiten mit einem Bus verbunden werden und dass durch die Umschaltmittel im Vergleichsmodus die Ausführungseinheiten mit einer Vergleichseinheit verbunden werden, und dass im Umschaltmittel ein Modussignal, das den gerade vorliegenden Betriebsmodus und/oder Änderungen eines Modussignals anzeigt, erzeugt wird und dass wenigstens die Änderungen des Modussignals und/oder das Modussignal selbst außerhalb der Umschaltmittel zur Verfügung gestellt wird.

Vorteilhafterweise verwendet man ein Verfahren, bei dem das Modussignal und/oder die Änderungen des Modussignals zur Überwachung verwendet werden indem eine vorliegende, einen Betriebsmodus repräsentierende Information mit einer durch das Modussignal und/oder die Änderungen des Modussignals dargestellte oder aus diesen abgeleitete Information verglichen wird.

Vorteilhafterweise verwendet man ein Verfahren, bei dem das Modussignal und/oder die Änderungen des Modussignals in einer weiteren Komponente des Rechnersystems ausgewertet wird.

Vorteilhafterweise verwendet man ein Verfahren, bei dem das Modussignal und/oder die Änderungen des Modussignals in einer zu den Ausführungseinheiten peripheren Komponente ausgewertet wird.

Vorteilhafterweise verwendet man ein Verfahren, bei dem das Modussignal und/oder die Änderungen des Modussignals in einer Speicherschutzeinheit (MPU) ausgewertet wird.

Vorteilhafterweise verwendet man ein Verfahren, bei dem das Modussignal und/oder die Änderungen des Modussignals in einem Interruptcontroller ausgewertet wird.

Vorteilhafterweise verwendet man ein Verfahren, bei dem das Rechnersystem ein Betriebssystem enthält und das Modussignal und/oder die Änderungen des Modussignals zur Eigenüberwachung des Betriebssystems verwendet werden indem eine im Betriebssystem vorliegende, einen Betriebsmodus repräsentierende Information mit einer durch das Modussignal und/oder die Änderungen des Modussignals dargestellte oder aus diesen abgeleitete Information verglichen wird.

Vorteilhafterweise verwendet man ein Verfahren, bei dem das Modussignal und/oder die Änderungen des Modussignals durch wenigstens eine Zusatzinformation abgesichert wird.

Vorteilhafterweise verwendet man ein Verfahren, bei dem das Modussignal und/oder die Änderungen des Modussignals dadurch abgesichert wird, dass das Modussignal und/oder die Änderungen des Modussignals wenigstens gedoppelt wird.

Vorteilhafterweise verwendet man ein Verfahren, bei dem das Modussignal und/oder die Änderungen des Modussignals als dual-rail-signal abgesichert werden.

Vorteilhafterweise verwendet man ein Verfahren, bei dem dass als Umschaltmittel eine kombinierte Umschalt- und Vergleichseinheit vorgesehen ist und das Modussignal und/oder die Änderungen des Modussignals in dieser Umschalt- und Vergleichseinheit erzeugt werden.

Vorteilhafterweise verwendet man ein Verfahren, bei dem das Modussignal und/oder die Änderungen des Modussignals in wenigstens einer Ausführungseinheit erzeugt werden.

Vorteilhafterweise verwendet man ein Verfahren, bei dem das Modussignal und/oder die Änderungen des Modussignals in einer Komponente erzeugt werden, die eine kombinierte Umschalt-und Vergleichseinheit sowie eine Einheit zur Umschaltwunscherkennung umfasst.

Vorteilhafterweise verwendet man ein Verfahren, bei dem mehr als zwei Betriebsmodi vorgesehen sind, zwischen denen umgeschaltet werden kann.

Vorteilhafterweise verwendet man ein Verfahren, bei dem zur Anzeige des jeweiligen Betriebsmodus ein konfigurierbares Betriebsmoduskennzeichen vorgesehen ist.

Vorteilhafterweise verwendet man ein Verfahren, bei dem zur Anzeige des jeweiligen Betriebsmodus eine konfigurierbare Zeigervariable vorgesehen ist.

Vorteilhafterweise verwendet man ein Verfahren, bei dem basierend auf dem Modussignal und/oder der Änderungen des Modussignals eine Fehlererkennung durchgeführt wird, wobei im Rahmen dieser Fehlererkennung wenigstens ein Fehlersignal erzeugt wird.

Vorteilhafterweise verwendet man ein Verfahren, bei dem die Auswertung des Modussignals für einen Sicherheitsnachweis verwendet wird.

Vorteilhafterweise verwendet man ein Verfahren, bei dem das Modus Signal derart mehrwertig ist, dass mehr als zwei Modi durch das Modus-Signal darstellbar sind.

Vorteilhafterweise verwendet man ein Verfahren, bei dem in einem Vergleichsmodus ein Voting verwendet wird.

Vorteilhafterweise verwendet man ein Verfahren, bei dem in einem Vergleichsmodus ein fehlertoleranter Algorithmus verwendet wird

Vorteilhafterweise verwendet man eine Umschaltsvorrichtung für ein Rechnersystem mit wenigstens zwei Ausführungseinheiten wobei bei dem Rechnersystem zwischen wenigstens zwei Betriebsmodi umgeschaltet wird und ein erster Betriebsmodus einem Vergleichsmo-, dus und ein zweiter Betriebsmodus einem Performanzmodus entspricht **dadurch gekennzeichnet, dass** Umschaltmittel vorgesehen sind, die im Performancemodus die Ausführungseinheiten mit einem Bus verbinden und dass die Umschaltmittel im Vergleichsmodus die Ausführungseinheiten mit einer Vergleichseinheit verbinden, und dass im Umschaltmittel ein Modussignal, das den gerade vorliegenden Betriebsmodus und/oder Änderungen des Modussignals anzeigt, erzeugt wird und dass die Umschaltmittel wenigstens die Änderungen des Modussignals und/oder das Modussignal selbst außerhalb der Umschaltmittel zur Verfügung stellen.

Vorteilhafterweise verwendet man eine Vorrichtung, bei der das Modus Signal derart erzeugt wird, dass mehr als zwei Modi durch das Modus-Signal darstellbar sind

Vorteilhafterweise verwendet man eine Vorrichtung, bei der die Bedeutung oder die Schnittstellensyntax des Modussignals konfigurierbar sind

Weitere Vorteile und vorteilhafte Ausgestaltungen ergeben sich aus den Merkmalen der Ansprüche sowie der Beschreibung.

### Figuren

In der Figur 1 ist ein Multiprozessorsystem G60 mit zwei Ausführungseinheiten G10a, G10b einer Vergleichseinheit G20, einer Umschalteinheit G50 und einer Einheit zur Umschaltwunscherkennung G40 dargestellt.
In Figur 2 ist ein Multiprozessorsystem G60 mit zwei Ausführungseinheiten G10a, G10b einer kombinierten Vergleichs- und Umschalteinheit G70 bestehend aus einer Vergleichseinheit G20 und einer Umschalteinheit G50 sowie einer Einheit zur Umschaltwunscherkennung G40 dargestellt.
In Figur 3 ist ein Multiprozessorsystem G60 mit zwei Ausführungseinheiten G10a, G10b einer kombinierten Umschaltwunscherkennung, Vergleichs und Umschalteinheit G80 bestehend aus einer Vergleichseinheit G20 und einer Umschalteinheit G50 und einer Einheit zur Umschaltwunscherkennung G40, dargestellt.
In Figur 4 ist ein Multiprozessorsystem G200 mit zwei Ausführungseinheiten G210a, G210b einer Umschalt und Vergleichseinheit G260 dargestellt.
In der Figur 5 ist in einem Flussdiagramm ein Verfahren dargestellt, das innerhalb einer speziellen Pipelinestufe G230a, G230b eine spezielle undefinierte Bitkombination mit einer NOP oder anderen neutralen Bitkombination austauscht.
In Figur 6 ist ein Multiprozessorsystem H200 mit zwei Ausführungseinheiten H210a, H210b und einer Umschalt und Vergleichseinheit H260 dargestellt.
In der Figur 7 ist in einem Flussdiagramm ein Verfahren dargestellt das zeigt, wie mit Hilfe der Einheiten-ID der Programmfluss beim Wechsel von einem Vergleichsmodus in einen Performanzmodus in einem Multiprozessorsystem mit 2 Ausführungseinheiten getrennt werden kann.
In Figur 8 ist ein mögliches Verfahren dargestellt, wie mit Hilfe der Einheiten-ID der Programmfluss beim Wechsel von einem Vergleichsmodus in einen Performanzmodus in einem Multiprozessorsystem mit 3 Ausführungseinheiten getrennt werden kann.
In Figur 9 ist in einem Flussdiagramm ein Verfahren dargestellt, das die Ausführungseinheiten beim Umschalten vom Performanzmodus in den Vergleichsmodus synchronisiert.
In Figur 10 ist ein Zustandsautomat dargestellt, der die Umschaltung zwischen einem Performanz und einem Vergleichsmodus darstellt
In Figur 11 ist ein Multiprozessorsystem G400 mit zwei Ausführungseinheiten sowie zwei Interruptcontrollern G420a, G420b inklusive darin enthaltenen Interrupt Maskierungsregistern G430a, G430b und verschiedenen Interruptquellen G440a bis G440n dargestellt.
In Figur 12 wird ein Multiprozessorsystem mit zwei Ausführungseinheiten, einer Umschalt-und Vergleichseinheit und einem Interruptcontroller mit drei Registersätzen dargestellt.
In Figur 13 ist die einfachste Form eines Vergleichers dargestellt.
Figur 14 zeigt einen Vergleicher mit einer Einheit um einen Phasenversatz zu auszugleichen.
In Figur 15 ist das prinzipielle Verhalten der bevorzugten Komponente M700 (Umschalt- und Vergleichseinheit) im Vergleichsmodus beschrieben.
In Figur 16 ist das prinzipielle Verhalten der bevorzugten Komponente M700 (Umschalt- und Vergleichseinheit) im Performanzmodus beschrieben.
In Figur 17 ist eine Ausführungsform der Umschalt und Vergleichseinheit dargestellt.
In Figur 18 ist eine weitere Ausführungsform der Umschalt und Vergleichseinheit dargestellt.
In Figur 19 ist eine Umschalt und Vergleichseinheit, die ein Modus Signal erzeugt, dargestellt.
In Figur 20 ist eine allgemeine Darstellung einer Umschalt- und Vergleichseinheit dargestellt.
Figur 21 zeigt eine allgemeine Darstellung einer Umschalt- und Vergleichseinheit, die ein allgemeines Modus und ein allgemeines Fehlersignal erzeugt.
In Figur 22 ist die Frage Antwort Kommuikation mit einer externen Einheit dargestellt.
In Figur 23 ist die Kommunikation mit einem inteligenten Aktor dargestellt.

### Beschreibung der Ausführungsbeispiele

Als Ausführungseinheit kann im Folgenden sowohl ein Prozessor, ein Core, eine CPU, als auch eine FPU (Floating Point Unit), ein DSP (Digitaler Signalprozessor), ein Coprozessor oder eine ALU (Arithmetic logical Unit) bezeichnet werden.

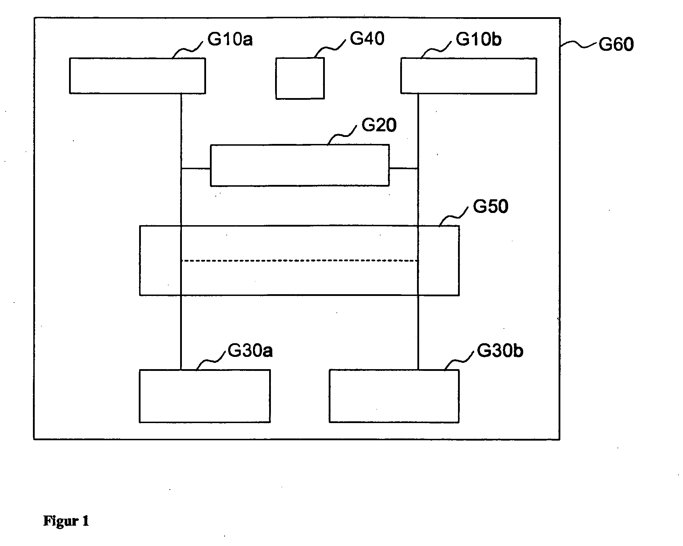

In der Figur 1 ist ein Multiprozessorsystem G60 mit zwei Ausführungseinheiten G10a, G10b einer Vergleichseinheit G20, einer Umschalteinheit G50 und einer Einheit zur Umschaltwunscherkennung G40 dargestellt.

Die Erfindung bezieht sich auf ein Multiprozessorsystem G60 dargestellt in Figur 1, Figur 2, Figur 3 mit wenigstens zwei Ausführungseinheiten G10a, G10b, einer Vergleichseinheit G20, einer Umschalteinheit G50 und einer Einheit zur Umschaltwunscherkennung G40. Die Umschalteinheit G50 hat wenigstens zwei Ausgänge zu wenigstens zwei Systemschnittstellen G30a, G30b. Über diese Schnittstellen können Register, Speicher oder Peripherals wie Digitale Ausgänge, D/A-Wandler, Kommunikationscontroller angesteuert werden. Dieses Multiprozessorsystem kann in wenigstens zwei Betriebsmodi betrieben werden, einem Vergleichsmodus (VM) und einem Performanzmodus (PM).

Im Performanzmodus werden in den unterschiedlichen Ausführungseinheiten unterschiedliche Befehle, Programmsegmente oder Programme parallel ausgeführt. In diesem Betriebsmodus ist die Vergleichseinheit G20 deaktiviert. Die Umschalteinheit G50 ist in diesem Betriebsmodus so konfiguriert, dass jede Ausführungseinheit G10a, G10b mit einer Systemschnittstelle G30a, G30b verbunden ist. Dabei ist die Ausführungseinheit G10a mit der Systemschnittstelle G30a und die Ausführungseinheit G10b mit der Systemschnittstelle G30b verbunden.

Im Vergleichsmodus werden in beiden Ausführungseinheiten G10a, G10b gleiche oder gleichartige Befehle, Programmsegmente oder Programme abgearbeitet. Günstigerweise werden diese Befehle taktsynchron abgearbeitet, es ist aber auch eine Abarbeitung mit Asynchronität oder einem definiertem Taktversatz denkbar. Die Ausgangssignale der Ausführungseinheiten G10a, G10b werden in der Vergleichseinheit G20 verglichen. Bei einem Unterschied wird auf einen Fehler erkannt und es können entsprechende Maßnahmen ergriffen werden. Diese Maßnahmen können ein Fehlersignal auslösen, eine Fehlerbehandlung einleiten, Schalter betätigen oder eine Kombination von diesen und weiteren denkbaren Maßnahmen sein. Die Umschalteinheit G50 ist in einer Variation so konfiguriert, dass nur ein Signal zu den Systemschnittstellen G30a, G30b verbunden ist. In einer anderen Konfiguration bewirkt die Umschalteinheit nur, dass die verglichenen und damit gleichen Signale an die Systemschnittstellen G30a, G30b verbunden werden.

Die Umschaltwunscherkennung G40 detektiert unabhängig vom gerade aktiven Modus einen Umschaltwunsch in einen anderen Modus.

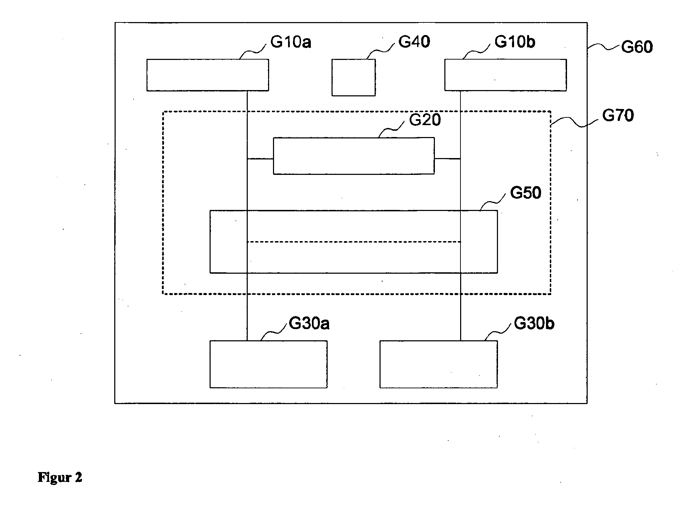

In Figur 2 ist ein Multiprozessorsystem G60 mit zwei Ausführungseinheiten G10a, G10b einer kombinierten Vergleichs- und Umschalteinheit G70 bestehend aus einer Vergleichseinheit G20 und einer Umschalteinheit G50 sowie einer Einheit zur Umschaltwunscherkennung G40 dargestellt.

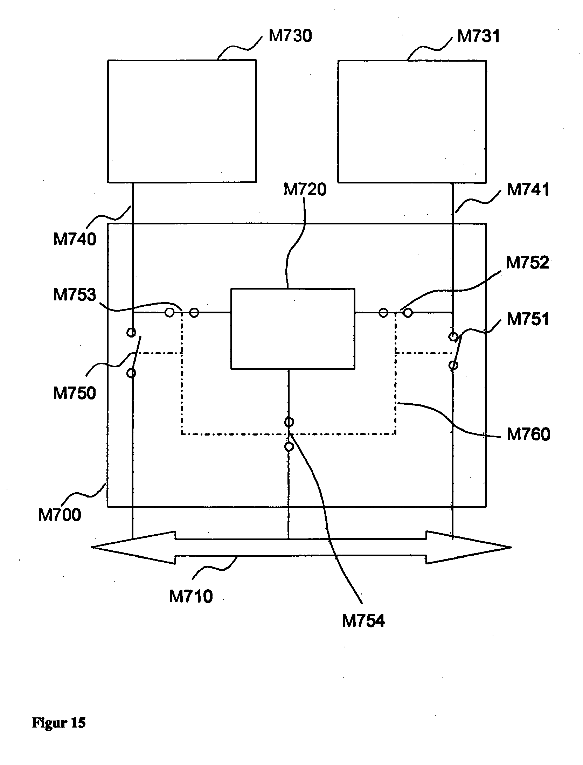

In einer Ausführungsform des oben beschriebenen Sachverhaltes, kann die Umschalteinheit G50 und die Vergleichseinheit G20 zu einer gemeinsamen Umschalt- und Vergleichseinheit (UVE) G70 zusammengefasst sein, wie in Figur 2 dargestellt. Diese gemeinsame Komponente G70 übernimmt dann die Aufgaben der Einzelkomponenten G50, G20. In Figur 15, Figur 16, Figur 17, Figur 18 und Figur 19 sind Ausführungsvarianten der UVE G70 dargestellt.

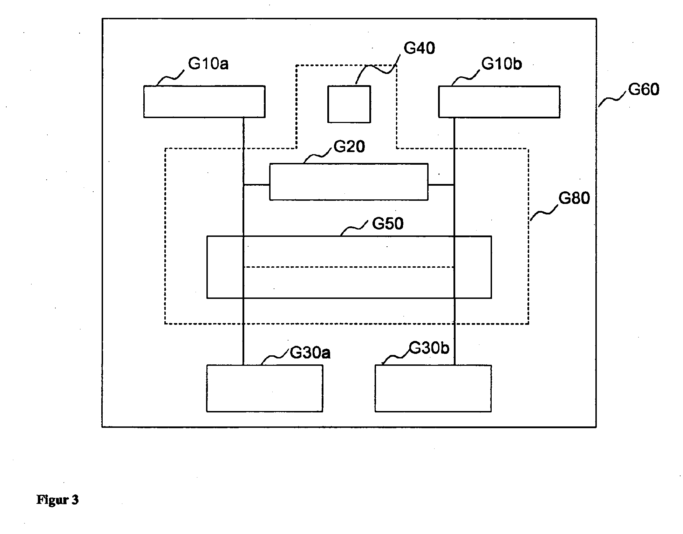

In einer weiteren Ausführungsform, wie in Figur 3 dargestellt, kann die Einheit zur Umschaltwunscherkennung G40, der Vergleicher G20 und die Umschalteinheit G50 in einer gemeinsamen Komponente G80 zusammengefasst sein. In einer weiteren Ausführungsform, die nicht in einer Figur dargestellt ist, kann die Umschaltwunscherkennung G40 und der Vergleicher G20 in einer gemeinsamen Komponente zusammengefasst sein. Ebenfalls denkbar ist eine Zusammenfassung Umschaltwunscherkennung G40 mit dem Umschalter G50 in einer gemeinsamen Komponente.

Im weiteren Text wird, falls nicht anders angegeben, davon ausgegangen, dass eine Umschaltwunscherkennung G40 und eine kombinierte Umschalt und Vergleichseinheit G70, vorliegen.

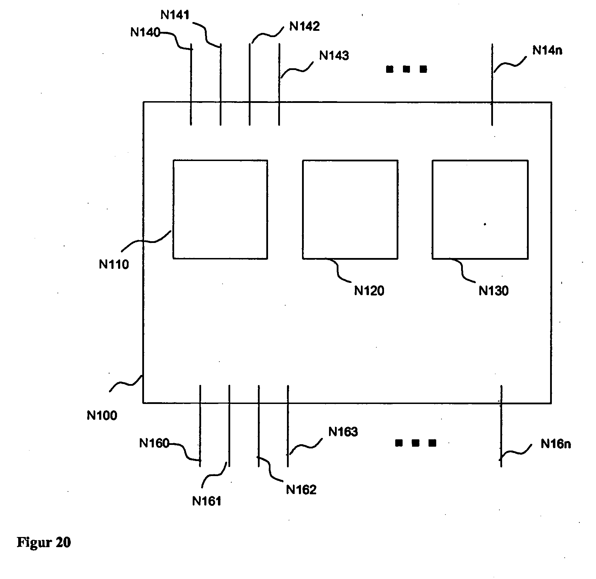

Ein allgemeiner Fall der Umschalt- und Vergleichskomponente, auch für den Verwendung für mehr als zwei Ausführungseinheiten, ist in Figur 20 gezeigt. Von den n zu berücksichtigenden Ausführungseinheiten gehen n Signale N140, ..., N14n an die Umschalt- und Vergleichskomponente N100. Diese kann bis zu n Ausgangssignale N160, ..., N16n aus diesen Eingangssignalen erzeugen. Im einfachsten Fall, dem "reinen Performanzmodus", werden alle Signale N14i auf die entsprechenden Ausgangssignale N16i geleitet. Im entgegen gesetzten Grenzfall, dem "reinen Vergleichsmodus" werden alle Signale N140, ..., N14n nur auf genau eines der Ausgangssignale N16i geleitet.

An dieser Figur lässt sich darlegen, wie die verschiedenen denkbaren Modi entstehen können. Dazu ist in dieser Figur die logische Komponente einer Schaltlogik N110 enthalten. Diese Komponente muss nicht als eigene Komponente vorhanden sein. Entscheidend ist, dass die beschriebenen Funktionen im System realisiert sind. Die Schaltlogik N110 legt zunächst fest, wie viele Ausgangssignale es überhaupt gibt. Weiter legt sie fest, welche der Eingangssignale zu welchem der Ausgangssignale beitragen. Dabei kann ein Eingangssignal zu genau einem Ausgangssignal beitragen. In mathematischer Form anders formuliert ist also durch die Schaltlogik eine Funktion definiert, die jedem Element der Menge {N140, ..., N14n} ein Element der Menge {N160, ..., N16n} zuordnet.

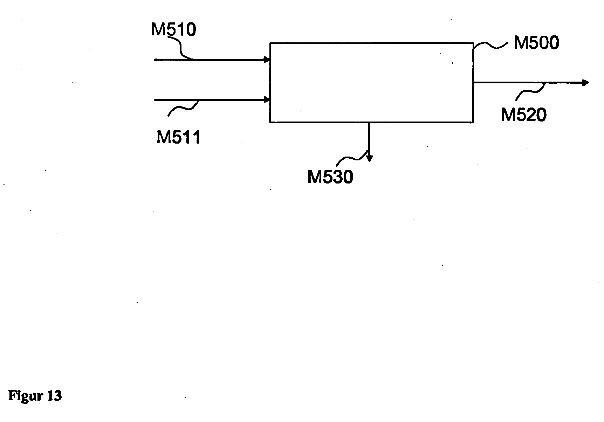

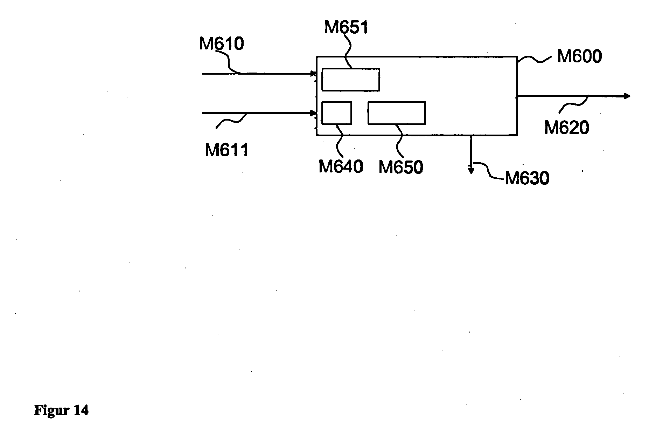

Die Verarbeitungslogik N120 legt dann zu jedem der Ausgänge N16i fest, in welcher Form die Eingänge zu diesem Ausgangsignal beitragen. Auch diese Komponente muss nicht als eigene Komponente vorhanden sein. Entscheidend ist wieder, dass die beschriebenen Funktionen im System realisiert sind. Um beispielhaft die verschiedenen Variationsmöglichkeiten zu beschreiben, sei ohne Beschränkung der Allgemeinheit angenommen, dass der Ausgang N160 durch die Signale N141, ..., N14m erzeugt wird. Falls m = 1 entspricht dies einfach einer Durchschaltung des Signals, falls m = 2 dann werden die Signale N141, N142 verglichen, wie beispielsweise im Vergleicher in Figur 13, Figur 14 beschrieben. Dieser Vergleich kann synchron oder asynchron durchgeführt werden, er kann bitweise oder nur auf signifikante Bits oder auch mit einem Toleranzband durchgeführt werden.
Falls m >= 3 gibt es mehrere Möglichkeiten.

Eine erste Möglichkeit besteht darin alle Signale zu vergleichen und bei Vorhandensein mindestens zweier verschiedener Werte einen Fehler zu detektieren, den man optional signalisieren kann.
Eine zweite Möglichkeit besteht darin, dass man eine k aus m -Auswahl vornimmt (k >m/2). Diese kann durch Verwendung von Vergleichern realisiert werden. Optional kann ein Fehlersignal generiert werden, wenn eines der Signale als abweichend erkannt wird. Ein möglicherweise davon verschiedenes Fehlersignal kann generiert werden, wenn alle drei Signale verschieden sind.
Eine dritte Möglichkeit besteht darin, diese Werte einem Algorithmus zuzuführen. Dies kann beispielsweise die Bildung eines Mittelwerts, eines Medianwert, oder die Verwendung eines fehlertoleranten Algorithmus (FTA) darstellen. Ein solcher FTA beruht darauf, Extremwerte der Eingangswerte weg zu streichen und eine Art der Mittelung über die restlichen Werte vorzunehmen. Diese Mittelung kann über die gesamte Menge der restlichen Werte oder vorzugsweise über eine in HW leicht zu bildenden Teilmenge vorgenommen werden. In diesem Fall ist es nicht immer notwendig, die Werte tatsächlich zu vergleichen. Bei der Mittelwertbildung muss beispielsweise nur addiert und dividiert werden, FTM, FTA oder Median erfordern eine teilweise Sortierung. Gegebenenfalls kann auch hier bei hinreichend großen Extremwerten optional ein Fehlersignal ausgegeben werden.

Diese verschiedenen genannten Möglichkeiten der Verarbeitung mehrerer Signale zu einem Signal werden der Kürze wegen als Vergleichsoperationen bezeichnet.
Die Aufgabe der Verarbeitungslogik ist es also, die genaue Gestalt der Vergleichsoperation für jedes Ausgangssignal - und damit auch für die zugehörigen Eingangssignale - festzulegen. Die Kombination der Information der Schaltlogik N110 (d.h. die o.g. Funktion) und der Verarbeitungslogik (d.h. die Festlegung der Vergleichsoperation pro Ausgangssignal, d.h. pro Funktionswert) ist die Modusinformation und diese legt den Modus fest. Diese Information ist im allgemeinen Fall natürlich mehrwertig, d.h. nicht nur über ein logisches Bit darstellbar. Nicht alle theoretisch denkbaren Modi sind in einer gegebenen Implementierung sinnvoll, man wird vorzugsweise die Zahl der erlaubten Modi einschränken. Zu betonen ist, dass im Fall von nur zwei Ausführungseinheiten, wo es nur einen Vergleichsmodus gibt, die gesamte Information auf nur ein logisches Bit kondensiert werden kann.
Eine Umschaltung von einem Performanz- in einen Vergleichsmodus ist im allgemeinen Fall dadurch charakterisiert, dass Ausführungseinheiten, die im Performanzmodus auf verschiedene Ausgänge hin abgebildet werden, im Vergleichsmodus auf den gleichen Ausgang hin abgebildet werden. Vorzugsweise ist dies dadurch realisiert, dass es ein Teilsystem von Ausführungseinheiten gibt, bei dem im Performanzmodus alle Eingangssignale N14i, die im Teilsystem zu berücksichtigen sind, direkt auf korrespondierende Ausgangssignale N16i geschaltet werden, während sie im Vergleichsmodus alle auf einen Ausgang hin abgebildet sind. Alternativ kann eine solche Umschaltung auch dadurch realisiert werden, dass Paarungen geändert werden. Es ist dadurch erläutert, dass man im allgemeinen Fall nicht von dem einen Performanzmodus und dem einen Vergleichsmodus sprechen kann, obwohl man in einer gegebenen Ausprägung der Erfindung die Menge der erlaubten Modi so einschränken kann, dass dies der Fall ist. Man kann aber immer von einer Umschaltung von einem Performanz- in einen Vergleichsmodus (und umgekehrt) sprechen.
Zwischen diesen Modi kann, über Software gesteuert, dynamisch im Betrieb umgeschaltet werden. Ausgelöst wird die Umschaltung dabei entweder über die Ausführung von speziellen Umschaltinstruktionen, speziellen Instruktionssequenzen, explizit gekennzeichneten Instruktionen oder durch den Zugriff auf bestimmte Adressen durch wenigstens eine der Ausführungseinheiten des Multiprozessorsystems.

Die Fehlerschaltungslogik N130 sammelt die Fehlersignale, die beispielsweise von den Vergleichern generiert werden, und kann optional die Ausgänge N16i passiv schalten, indem sie diese beispielsweise über einen Schalter unterbricht.

Die folgenden Beispiele konzentrieren sich aber zumeist auf den Fall von zwei Ausführungseinheiten, an dem sich die meisten Konzepte einfacher darstellen lassen

Die Umschaltung zwischen den Modi kann durch verschiedene Verfahren kodiert werden. In einem möglichen Verfahren sind spezielle Umschaltbefehle zu verwenden, die von der Einheit zur Umschaltwunscherkennung G40 detektiert werden. Ein weiteres mögliches Verfahren zur Kodierung der Umschaltung ist durch den Zugriff auf einen speziellen Speicherbereich definiert den wieder die Einheit zur Umschaltwunscherkennung G40 detektiert. Ein weiteres Verfahren wertet in der Einheit zur Umschaltwunscherkennung G40 ein externes Signal, das eine Umschaltung signalisiert, aus. Im Folgenden wird ein Verfahren beschrieben, das nicht benutzte Bitkombinationen im bestehenden Befehlssatz des Prozessors verwendet. Besonderer Vorteil dieses Verfahrens ist es, dass bestehende Entwicklungsumgebungen (Assembler, Compiler, Linker, Debugger) weiter verwendet werden kann.

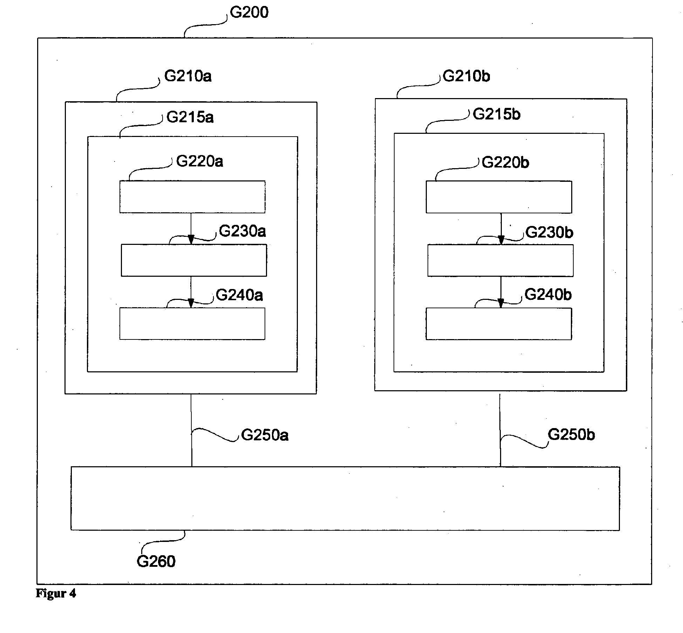

In Figur 4 ist ein Multiprozessorsystem G200 mit zwei Ausführungseinheiten G210a, G210b und einer Umschalt und Vergleichseinheit G260 dargestellt. Zur Umschaltung zwischen einem Vergleichsmodus und einem Performanzmodus (und umgekehrt) werden im Assembler nicht definierte Bitkombinationen der mindestens zwei Ausführungseinheiten G210a, G210b benutzt. Als nicht definierte oder undefinierte Bitkombinationen in diesem Sinne sind alle Bitkombinationen zu verstehen, die in der Beschreibung des Befehlssatz als undefiniert oder illegal spezifiziert sind. Dies sind z.B. Illegal Operand, Illegal Instruktion, Illegal Operation. Allgemeines Kennzeichen dieser undefinierten Bitkombinationen ist es, dass eine normale Ausführungseinheit bei der Ausführung einer solchen Bitkombination entweder ein Fehlersignal erzeugt oder ein nicht definiertes Verhalten zeigt. Diese Bitkombinationen werden also nicht benötigt um die Semantik eines gewöhnlichen Programms darzustellen.

Für die Softwareentwicklung kann damit die bisherige Entwicklungsumgebung benutzt werden, wie sie für Einprozessorsysteme vorliegt. Dies kann beispielsweise dadurch realisiert werden, dass man ein Makro "SWITCH MODE TO PM" und ein Makro "SWITCH MODE TO VM" definiert, das an geeigneter Stelle im Code entsprechende im oben definierten Sinn undefinierte Bitkombinationen einfügt.

Die Verwendung dieser Kombination wird dann als allgemeines "SWITCH" Makro definiert. Dieses bewirkt dann einen Wechsel abhängig vom derzeitigen Modus in den jeweils anderen. Falls im System mehr als zwei unterschiedliche Modi vorliegen, müssen zur Verwendung dieses Verfahrens mehr solcher Kombinationen vorliegen, vorzugsweise kann dann eine pro Modus zur Umschaltkennung verwendet werden.

Erfindungsgemäß wird der Umschaltwunsch durch eine im Befehlssatz nicht definierte Bitkombination kodiert. Diese dürfen innerhalb einer Ausführungseinheit G210a, G210b nicht in der üblichen Weise verarbeitet werden. Aus diesem Grund wird eine zusätzliche Pipelinestufe (REPLACE Stufe) G230a, G230b vorgeschlagen, die die entsprechenden Bitkombinationen erkennt und diese zur weiteren Verarbeitung durch neutrale Bitkombinationen ersetzt. Günstigerweise wird dazu der "NOP" (No Operation) Befehl benutzt. Ein NOP Befehl zeichnet sich dadurch aus, dass er den internen Zustand der Ausführungseinheit, bis auf den Intruktionszeiger nicht ändert. Die REPLACE Stufe G230a, G230b wird dabei nach der üblicherweise ersten Stufe, der FETCH Stufe G220a G220b und vor den restlichen Pipelinestufen G240a, G240b, werden im Assembler nicht definierte Bitkombinationen, die hier in einer Einheit zusammengefasst sind, eingefügt.

Erfindungsgemäß wird die hier dargestellte Implementierung einer Einheit zur Umschaltwunscherkennung G40 als spezielle Pipelinstufe G230a, G230b in einer Pipelineeinheit G215a, G215b, ein zusätzliche Signale G250a, G250b erzeugen, wenn eine entsprechende Bitkombination zur Umschaltung erkannt wurde, das einer separaten Umschalteinheit und Vergleichseinheit G260 signalisiert, dass ein Wechsel des Verarbeitungsmodus durchzuführen ist.

Die REP Stufen G230a, G230b sind vorzugsweise zwischen den FET G220a, G220b und den restlichen Pipelinestufen G240a, G240b in den Pipelineeinheiten G215a, G215b der Ausführungseinheiten G210a, G210b angeordnet. Die REP Stufen G230a, G230b erkennen dabei die entsprechenden Bitkombinationen und leiten in diesem Fall NOP Befehle an die übrigen Stufen G240a, G240b weiter. Gleichzeitig wird das jeweilige Signal G250a oder G250b aktiviert. In allen anderen Fällen verhalten sich die REP Stufen G230a, G230b neutral, d.h. alle anderen Befehle werden unverändert an die übrigen Stufen G240a, G240b weitergereicht.

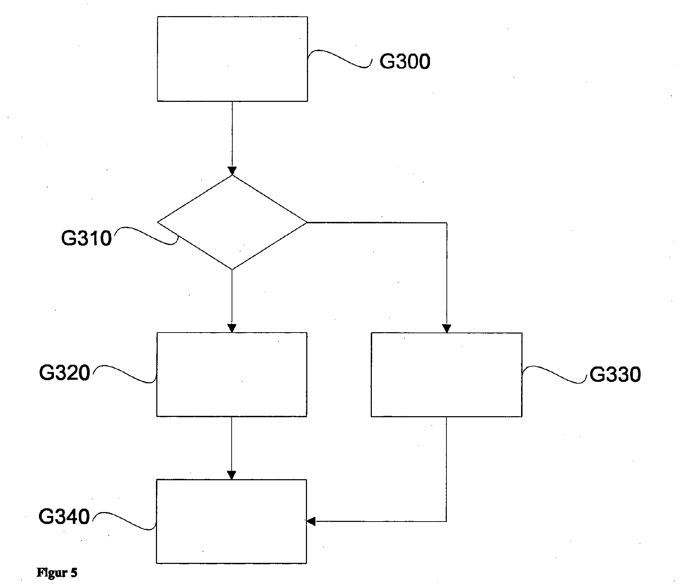

In der Figur 5 ist in einem Flussdiagramm ein Verfahren dargestellt, das innerhalb einer speziellen Pipelinestufe G230a, G230b eine spezielle undefinierte Bitkombination mit einer NOP oder anderen neutralen Bitkombination austauscht. In der FETCH Stufe G300 wird ein Befehl d.h. eine Bitkombination aus dem Speicher geholt. Danach wird im Block G310 unterschieden ob die geholte Bitkombination der speziellen undefinierten Bitkombination, die eine Umschaltung kodiert, entspricht. Wenn dies nicht der Fall ist, wird im nächsten Schritt G320 die Bitkombination ohne Veränderung an die übrigen Pipelinestufen G340 zur weiteren Verarbeitung übergeben. Wenn die spezielle Bitkombination, die eine Umschaltung kodiert, im Schritt G310 erkannt wurde, wird im Schritt G330 diese durch die NOP Bitkombination ersetzt und diese dann zur weiteren Verarbeitung an die weiteren Pipelinestufen G340 übergeben. In einer vorteilhaften Ausführungsform stellen die Blöcke G310, G320, G330 die Funktionalität einer erfindungsgemäßen REPLACE Stufe G230a, G230b dar, wobei diese auch weitere Funktionalität enthalten können.

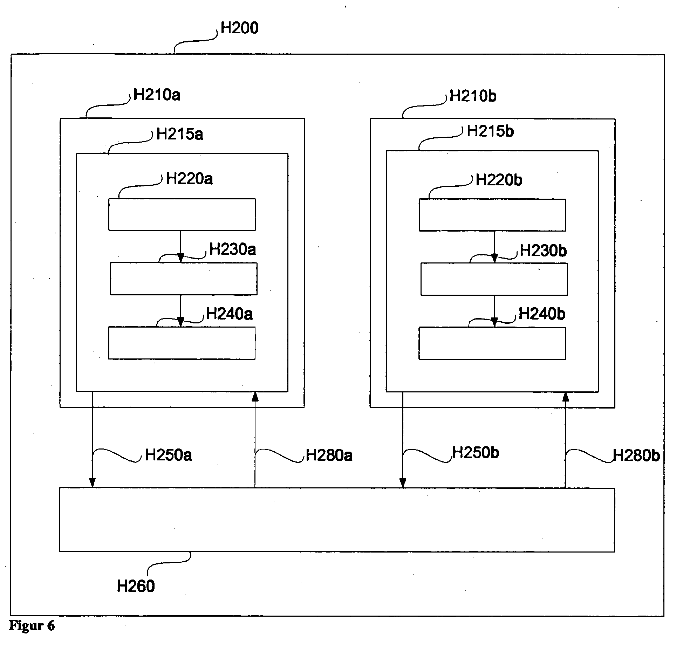

In Figur 6 ist ein Multiprozessorsystem H200 mit zwei Ausführungseinheiten H210a, H210b und einer Umschalt und Vergleichseinheit H260 dargestellt. Die Komponenten H220a, H220b, H240a, H240b haben die gleich Bedeutung wie G220a, G220b, G240a, G240b. In einer alternativen Ausführung der Einheit zur Umschaltwunscherkennung G40, hier beschrieben durch die speziellen Pipelinestufen H230a, H230b, besitzt diese neben den Signalen H250a, H250b, die eine Umschaltung signalisieren, weitere Signale. Damit die Ausführungseinheiten H210a, H210b beim Wechsel vom Performanzmodus in den Vergleichsmodus synchronisiert werden können, besitzen die Pipelineeinheiten H215a, H215b der Ausführungseinheiten H210a, H210b jeweils einen Signaleingang H280a, H280b, mit dem die Verarbeitung gestoppt werden kann. Dieses Signal wird von der Umschalt- und Vergleichseinheit H260 für diejenige Pipelineeinheit H215a oder H215b gesetzt, die zuerst einen Umschaltbefehl erkannt hat und damit das Signal H250a bzw. GH50b aktiviert hat. Erst wenn beide Pipelineeinheiten H215a, H215b der Ausführungseinheiten H210a, H210b den Umschaltbefehl erkannt haben und durch Software oder weitere Hardwaremaßnahmen ihre internen Zustände synchronisiert haben, wird dieses Signal H280a, H280b wieder zurückgenommen. Beim Wechsel vom Vergleichsmodus in den Performanzmodus werden die H280a, H280b nicht benötigt, da keine Synchronisation notwendig ist.

Vorraussetzung für den hier beschriebenen Vorschlag ist eine Einheit (als ID-Einheit bezeichnet) oder Verfahren, über den jede Ausführungseinheit ihre individuelle Nummer oder Einheiten-ID ermitteln kann. Bei einem System mit zwei Ausführungseinheiten kann beispielsweise eine Ausführungseinheit für sich die Nummer 0, die andere die Nummer 1 ermitteln. Bei einem System mit mehr als 2 Ausführungseinheiten werden die Nummern entsprechend vergeben bzw. ermittelt. Diese ID unterscheidet nicht zwischen einem Vergleichsmodus und einem Performanzmodus sondern bezeichnet eine Ausführungseinheit eineindeutig. Die ID-Einheit kann in den jeweiligen Ausführungseinheiten enthalten sein, zum Beispiel implementiert als Bit oder Bitkombination im Prozessorstatusregister oder als eigenes Register oder als einzelnes Bit oder als zu den Ausführungseinheiten externe Einheit die auf Anfrage eine entsprechende ID liefert.

Nachdem die Ausführungseinheiten gemäß einem Umschaltwunsch die Umschaltung in den Performanzmodus ausgeführt haben, ist zwar die Vergleichseinheit nicht mehr aktiv, aber die Ausführungseinheiten führen immer noch dieselben Befehle aus. Das liegt daran, dass die Instruktionszeiger, die die Stelle im Programm kennzeichnen, an denen eine Ausführungsarbeit im nächsten Schritt arbeitet bzw. zur Zeit arbeitet, von der Umschaltung nicht beeinflusst werden. Damit die Ausführungseinheiten anschließend verschiedene SW-Module ausführen können, muss der Programmablauf der Ausführungseinheiten getrennt werden. Der Sache entsprechend haben deswegen die Instruktionszeiger im Performanzmodus in der Regel verschiedene Werte, da ja erfindungsgemäß unabhängige Befehle, Programmsegmente oder Programme verarbeitet werden. Die Trennung der Programmflüsse geschieht im hier beschriebenen Vorschlag durch das Ermitteln der jeweiligen Ausführungseinheiten-Nummer. Je nachdem welche ID eine Ausführungseinheit besitzt, führt die Ausführungseinheit ein bestimmtes Softwaremodul aus. Da jede Ausführungseinheit eine individuelle Nummer oder ID besitzt, kann hierdurch der Programmfluss der beteiligten Ausführungseinheiten zuverlässig getrennt werden.

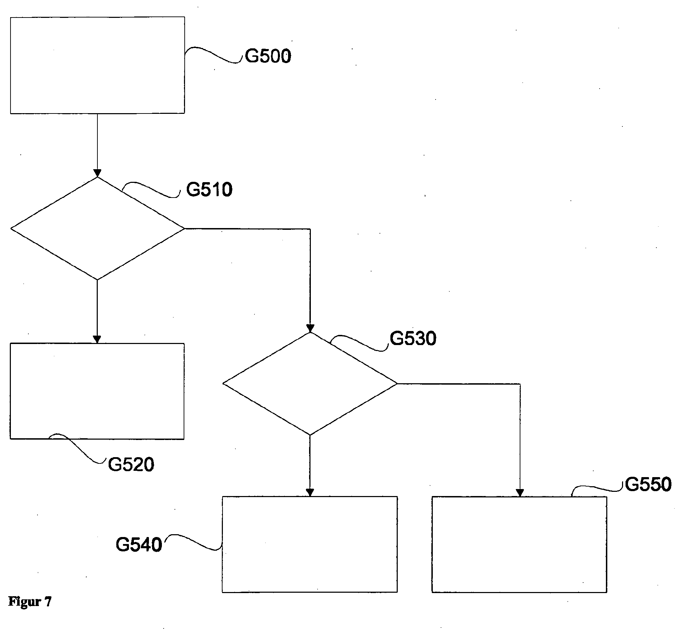

In der Figur 7 ist in einem Flussdiagramm ein Verfahren dargestellt das zeigt, wie mit Hilfe der Einheiten-ID der Programmfluss beim Wechsel von einem Vergleichsmodus in einen Performanzmodus in einem Multiprozessorsystem mit 2 Ausführungseinheiten getrennt werden kann. Nach dem Ausführen der Umschaltung von einem Vergleichs- in einen Performanzmodus G500 erfolgt eine Abfrage der Einheiten ID oder Ausführungseinheiten-Nummer G510 durch beide Ausführungseinheiten. Erfindungsgemäß wird dabei die Ausführungseinheit 0 die Ausführungseinheiten-Nummer 0 erhalten, die Ausführungseinheit 1 die Ausführungseinheiten-Nummer 1. In G510 erfolgt ein Vergleich der ermittelten Ausführungseinheiten-Nummer mit der Nummer 0. Falls diese gleich sind, fährt im Schritt G520 die Ausführungseinheit, für die dieser Vergleich erfolgreich war, mit dem Code für Ausführungseinheit 0 fort. Die Ausführungseinheit, für die dieser Vergleich nicht erfolgreich war, fährt in G530 mit dem Vergleich mit der Nummer 1 fort. Falls dieser Vergleich erfolgreich ist, wird mit dem Code für Ausführungseinheit 1 in G540 fortgefahren. Falls dieser Vergleich nicht erfolgreich ist, wurde für die entsprechende Ausführungseinheit damit eine Ausführungseinheiten-Nummer ungleich 0 und 1 ermittelt. Dieses stellt einen Fehlerfall dar und es wird mit G550 fortgefahren.

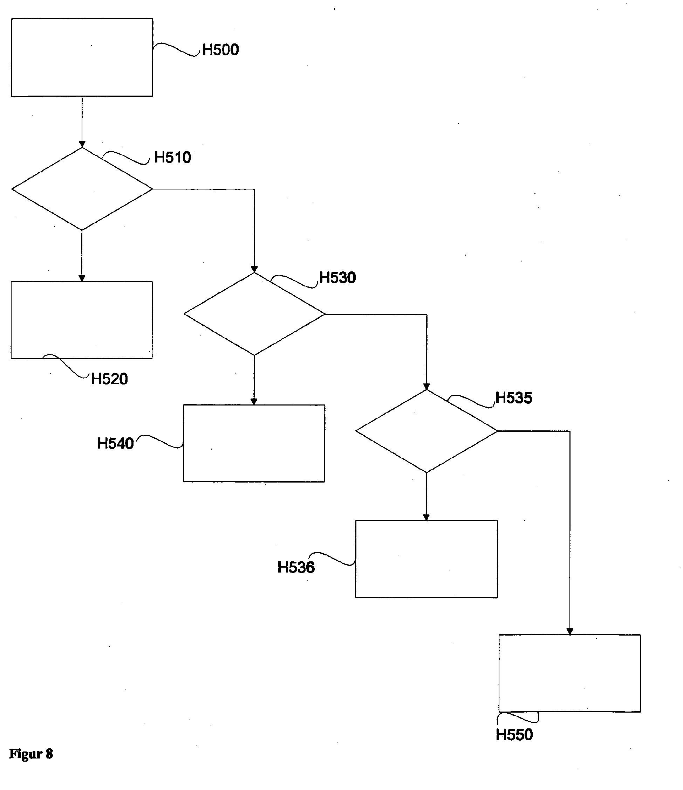

In Figur 8 ist ein mögliches Verfahren für 3 Ausführungseinheiten beschreiben. Nach dem Ausführen der Umschaltung von einem Vergleichs- in einen Performanzmodus H500 erfolgt eine Abfrage der Einheiten ID oder Ausführungseinheiten-Nummer H510 durch die Ausführungseinheiten. Erfindungsgemäß wird dabei zum Beispiel die Ausführungseinheit 0 die Ausführungseinheiten-Nummer 0 erhalten, die Ausführungseinheit 1 die Ausführungseinheiten-Nummer 1 und Ausführungseinheit 2 die Ausführungseinheiten-Nummer 2. In H510 erfolgt ein Vergleich der ermittelten Ausführungseinheiten-Nummer mit der Nummer 0. Falls diese gleich sind, fährt im Schritt H520 die Ausführungseinheit, für die dieser Vergleich erfolgreich war, mit dem Code für Ausführungseinheit 0 fort. Die Ausführungseinheiten, für die dieser Vergleich nicht erfolgreich war, fahren mit dem Vergleich mit der Nummer 1 in H530 fort. In der Ausführungseinheit, für die dieser Vergleich erfolgreich ist, wird mit dem Code für Ausführungseinheit 1 in H540 fort gefahren. Die Ausführungseinheiten, für die dieser Vergleich nicht erfolgreich war, fahren mit dem Vergleich mit der Nummer 2 in H535 fort. Die Ausführungseinheit, für die dieser Vergleich erfolgreich ist, wird mit dem Code für Ausführungseinheit 2 in H536 fort gefahren. Falls dieser Vergleich nicht erfolgreich war, wurde für die entsprechende Ausführungseinheit damit eine Ausführungseinheiten-Nummer ungleich 0,1 und 2 ermittelt. Dieses stellt einen Fehlerfall dar und es wird mit H550 fortgefahren. Alternativ zu dem Vergleich mit einer Nummer kann die ermittelte Ausführungseinheiten-Nummer auch direkt als Index in eine Sprungtabelle verwendet werden.

Entsprechend dieser Beschreibung kann dieses Verfahren auch für Multiprozessorsysteme mit mehr als 3 Ausführungseinheiten angewendet werden.

Wenn vom Performanzmodus in den Vergleichsmodus geschaltet wird, dann müssen mehrere Dinge beachtet werden. Bei der Umschaltung vom Performanzmodus in den Vergleichsmodus muss sichergestellt werden, dass die internen Zustände der Ausführungseinheiten nach dem Umschalten gleichartig sind, ansonsten würde im Vergleichsmodus eventuell auf einen Fehler erkannt werden, falls die unterschiedlichen Startzustände zu unterschiedlichen Ausgaben führen. Dies kann per Hardware, per Software, per Firmware oder in einer Kombination aller drei durchgeführt werden. Voraussetzung hierfür ist, dass alle Ausführungseinheiten gleiche oder gleichartige Befehle, Programme oder Programmsegmente nach der Umschaltung in den Vergleichsmodus ausführen. Im weiteren ist ein Synchronisationsverfahren beschrieben, das anwendbar ist, wenn der Vergleichsmodus sich dadurch auszeichnet, dass identische Befehle verarbeitet werden und ein bitgenauer Vergleich stattfindet

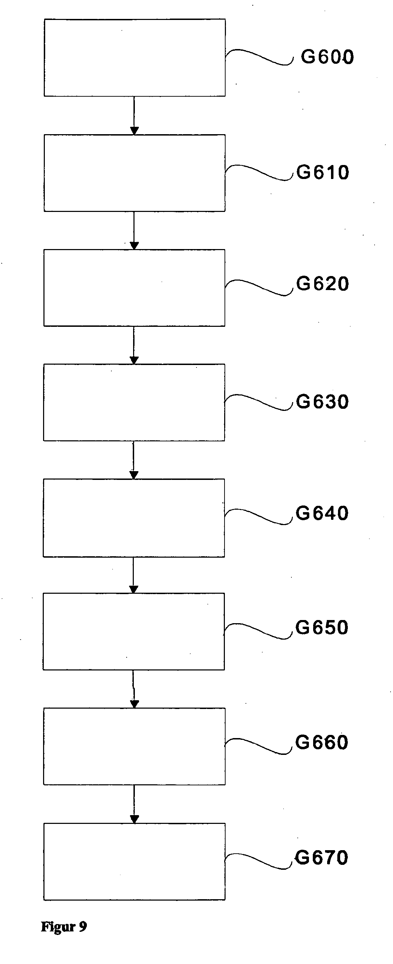

In Figur 9 ist in einem Flussdiagramm ein Verfahren dargestellt, das die Ausführungseinheiten beim Umschalten von einem Performanzmodus in einen Vergleichsmodus synchronisiert. Im Schritt G600 werden vorzugsweise alle Interrupts gesperrt. Dies ist nicht nur wichtig, weil die Interrupt-Controller für den Vergleichsmodus entsprechend umprogrammiert werden müssen. Auch durch Software soll der interne Zustand der Ausführungseinheiten angeglichen werden. Wenn aber während der Vorbereitung zum Umschalten in den Vergleichsmodus ein Interrupt ausgelöst wird, dann ist eine Angleichung nicht mehr ohne weiteren Aufwand möglich.

Schritt G610: Besitzen die beiden Ausführungseinheiten separate Caches, so muss auch der Inhalt der Caches vor der Umschaltung angeglichen werden, um zu verhindern, dass im Vergleichsmodus für eine Adresse für die eine Ausführungseinheit ein Cache-Hit und für eine andere Ausführungseinheiten ein Cache-Miss auftritt. Wird dies durch die Cache-Hardware nicht selbstständig durchgeführt, ist dies zum Beispiel durch Markieren aller Cachelines als ungültig zu bewerkstelligen. Es muss solange gewartet werden, bis der Cache (oder die Caches) komplett ungültig sind. Dies ist bei Bedarf durch eine Warteschleife im Programmcode sicherzustellen. Dies kann auch durch andere Mittel erreicht werden, entscheidend ist, dass nach diesem Schritt die Caches im gleichen Zustand sind.

Im Schritt G620 werden die Schreib-Puffer der Ausführungseinheiten geleert, damit nach der Umschaltung keine Aktivitäten der Ausführungseinheiten stattfinden, die noch aus dem Performanzmodus herrühren.

Im Schritt G630 wird der Zustand der Pipelinestufen der Ausführungseinheiten synchronisiert. Hierfür führt man beispielsweise eine geeignete Anzahl von NOP (No operation) Befehlen vor der Umschaltsequenz/Umschaltbefehl aus. Die Anzahl der NOP-Befehle richtet sich nach der Anzahl der Pipelinestufen und sind damit abhängig von der jeweiligen Architektur. Welcher Befehl sich als NOP-Befehl eignet, ist ebenfalls architekturabhängig. Besitzen die Ausführungseinheiten einen Instruktionscache, so ist dabei sicherzustellen, dass diese Befehlssequenz an den Grenzen einer Cacheline ausgerichtet ist (Alignment). Da der Instruktionscache vor der Ausführung dieser NOP's als ungültig markiert worden ist, müssen diese NOP's erst in den Cache geladen werden. Beginnt diese Befehlssequenz an einer Cachelinegrenze so ist der Datentransfer vom Speicher (z.B. RAM/ROM/Flash) zum Cache abgeschlossen, bevor der Befehl zum Umschalten erfolgt. Auch diese muss bei der Bestimmung der notwendigen Anzahl der NOP's berücksichtigt werden.

Im Schritt G640 wird der Befehlschritt zur Umschaltung in den Vergleichsmodus tatsächlich durchgeführt.

Im Schritt G650 wird der Inhalt der jeweiligen Registerfiles jeder Ausführungseinheit angeglichen. Hierfür sind die Register vor oder nach der Umschaltung mit identischen Inhalten zu laden. Wichtig ist hierbei, dass nach der Umschaltung der Inhalt eines Registers in den Ausführungseinheiten identisch ist, bevor der Registerinhalt nach extern transferiert und damit von der Vergleichseinheit verglichen wird.

Im Schritt G660 werden die Interrupt-Controller umprogrammiert, so dass ein externes Interruptsignal bei allen zusammengeschalteten Ausführungseinheiten den gleichen Interrupt auslöst.

Im Schritt G670 werden die Interrupts wieder freigegeben.

Ist es vom Programmablauf nicht eindeutig, wann in den Vergleichsmodus umgeschaltet werden soll, so müssen die beteiligten Ausführungseinheiten über die beabsichtigte Umschaltung informiert werden. Hierfür wird vorzugsweise in den zu den jeweiligen Ausführungseinheiten gehörenden Interrupt-Controller z.B. per SW ein Interrupt initiiert. Die Interruptbehandlung veranlasst dann die Ausführung der oben beschriebenen Sequenz zur Zusammenschaltung.

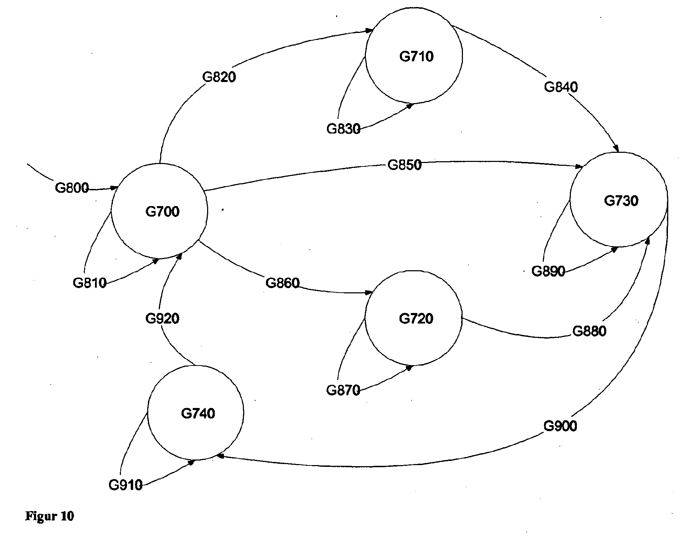

In Figur 10 ist ein Zustandsautomat dargestellt, der die Umschaltung zwischen einem Performanz und einem Vergleichsmodus (und umgekehrt) darstellt. Beim Start des Systems, verursacht durch "Power On" oder auch Reset (Software oder Hardware), wird das System über den Übergang G800 in den Zustand G700 versetzt. Allgemein gilt, dass das System nach einem undefinierten Ereignis, das in der Lage ist, einen Reset auszulösen, immer im Zustand G700 anfängt zu arbeiten. Beispielhafte Ereignisse, die einen Reset auslösen können, sind externe Signale, Probleme in der Spannungsversorgung oder interne Fehlerereignisse, die ein Weitearbeiten nicht mehr sinnvoll machen. Der Zustand G700 der Umschalt und Vergleichseinheit G70 und auch des Multiprozessorsystems G60, in dem im Performanzmodus gearbeitet wird, ist damit der Default Zustand des Systems. In allen Fällen in den ein sonst undefinierter Zustand eingenommen würde, wird der Default Zustand G700 eingenommen. Diese Default Stellung des Zustand G700 wird dabei durch Hardwaremaßnahmen sichergestellt. Beispielsweise kann der Systemzustand bzw. der Zustand der Umschalt- und Vergleichseinheit G60 in einem Register, in einem Bit einem Register, durch eine Bitkombination in einem Register oder durch ein Flip-Flop, kodiert sein.
Per Hardware wird dann sichergestellt, dass nach einem Reset oder Power on immer der Zustand G700 eingenommen wird. Dies wird dadurch sichergestellt, dass z.B. das Reset Signal bzw. das "Power On" Signal auf den Reset Eingang oder den Set Eingang des Flip-Flops oder des Registers geführt wird.

Im Zustand G700 arbeitet das System in einem Performanzmodus. Die Ausführungseinheiten G10a, G10b arbeiten damit unterschiedliche Befehle, Programme oder Programmstücke ab.
Ein Umschaltwunsch kann beispielsweise dadurch erkannt werden, dass eine Ausführungseinheit G10a, G10b einen speziellen Umschaltbefehl ausfüht. Andere Möglichkeiten sind eine Erkennung durch den Zugriff auf eine spezielle Speicheradresse, durch ein internes Signal oder auch durch ein externes Signal. Solange kein Umschaltwunsch vorliegt, verbleibt das Multiprozessorsystem G60 und damit auch die Umschalt und Vergleichseinheit G70 im Zustand G700. Im Weiteren wird mit dem Umschaltwunsch das Erkennen einer Umschaltbedingung bezeichnet, die so gekennzeichnet ist wie ein Umschaltwunsch in diesem speziellen System gekennzeichnet wird.
Das Verbleiben im Zustand G700 ist über den Übergang G810 dargestellt. Wird von der Ausführungseinheit G10a ein Umschaltwunsch erkannt, dann wird über den Übergang G820 die Umschalt und Vergleichseinheit G70 in den Zustand G710 überführt. Der Zustand G710 bezeichnet damit die Situation, dass die Ausführungseinheit G10a einen Umschaltwunsch erkannt hat und wartet, bis die Ausführungseinheit G10b ebenfalls einen Umschaltwunsch erkennt. Solange dies nicht der Fall ist, verbleibt die Umschalt und Vergleichseinheit G70 im Zustand G710, was mit dem Übergang G830 dargestellt ist
Der Übergang G840 findet statt, wenn im Zustand G710 die Ausführungseinheit G10b ebenfalls einen Umschaltwunsch erkennt. Die Umschalt und Vergleichseinheit G70 nimmt damit den Zustand G730 ein. Dieser Zustand bezeichnet die Situation, wenn beide Ausführungseinheiten G10a, G10b einen Umschaltwunsch erkannt haben. In Zustand G730 finden die Synchronisationsverfahren statt, mit denen die zwei Ausführungseinheiten G10a, G10b zueinander synchronisiert werden, um anschließend im Vergleichsmodus zu arbeiten. Während dieses Vorgangs verbleibt die Umschalt und Vergleichseinheit G70 im Zustand G730, was mit dem Übergang G890 dargestellt ist.
Falls im Zustand G700 zuerst von der Ausführungseinheit G10b ein Umschaltwunsch erkannt wird, dann wird über den Übergang G860 in den Zustand G720 geschaltet. Der Zustand G720 bezeichnet damit die Situation, dass die Ausführungseinheit G10b einen Umschaltwunsch erkannt hat und wartet bis die Ausführungseinheit G10a ebenfalls einen Umschaltwunsch erkennt. Solange dies nicht der Fall ist, verbleibt die Umschalt und Vergleichseinheit G70 im Zustand G720, was mit dem Übergang G870 dargestellt ist. Der Übergang G880 findet statt wenn im Zustand G720 die Ausführungseinheit G10 a ebenfalls einen Umschaltwunsch erkennt. Die Umschalt und Vergleichseinheit nimmt damit den Zustand G730 ein.
Falls im Zustand G700 beide Ausführungseinheiten G10a, G10b gleichzeitig einen Umschaltwunsch erkennen, wird sofort in den Zustand G730 übergegangen. Dieser Fall stellt den Übergang G850 dar.
Wenn die Umschalt und Vergleichseinheit G70 im Zustand G730 ist, haben beide Ausführungseinheiten G10a, G10b einen Umschaltwunsch erkannt. In diesem Zustand werden die internen Zustände der Ausführungseinheiten G10a, G10b synchronisiert, um nach Beendigung dieser Synchronisationsvorgänge im Vergleichsmodus zu arbeiten. Mit Beendigung dieser Synchronisationsarbeiten findet der Übergang G900 statt. Dieser Übergang zeigt das Ende der Synchronisation an. Im Zustand G740 arbeiten die Ausführungseinheiten G10a, G10b im Vergleichsmodus. Die Beendigung der Synchronisationsarbeiten kann von den Ausführungseinheiten G10a, G10b selbst signalisiert werden. Dies bedeutet, dass der Übergang G900 stattfindet, wenn beide Ausführungseinheiten G10a, G10b signalisiert haben, dass sie bereit sind im Vergleichsmodus zu arbeiten. Die Beendigung kann auch über eine fest eingestellte Zeit signalisiert werden. Dies bedeutet, dass in der Umschalt und Vergleichseinheit G70 fest codiert ist, wie lange im Zustand G730 verblieben wird. Diese Zeit wird so eingestellt, dass sicher beide Ausführungseinheiten G10a, G10b ihre Synchronisationsarbeiten beendet haben. Nach Ablauf dieser Zeit wird dann der Übergang G900 initiiert. In einer weiteren Variation kann die Umschalt und Vergleichseinheit G70 die Zustände der Ausführungseinheiten G10a, G10b überwachen und selbst erkennen, wenn beide Ausführungseinheiten G10a, G10b ihre Synchronisationsarbeiten beendet haben. Nach dem Erkennen wird dann der Übergang G900 eingeleitet.

Solange kein Umschaltwunsch erkannt wird, verbleibt das Multiprozessorsystem G60 im Vergleichsmodus, dargestellt durch den Übergang G910. Wenn im Zustand G740 ein Umschaltwunsch erkannt wird, wird die Umschalt und Vergleichseinheit über den Übergang G920 in den Zustand G700 versetzt. Wie schon beschrieben, arbeitet das System im Zustand G700 im Performanzmodus. Die Trennung der Progammflüsse beim Übergang vom Zustand G740 in den Zustand G700, kann dann wie im beschriebenen Verfahren durchgeführt werden.

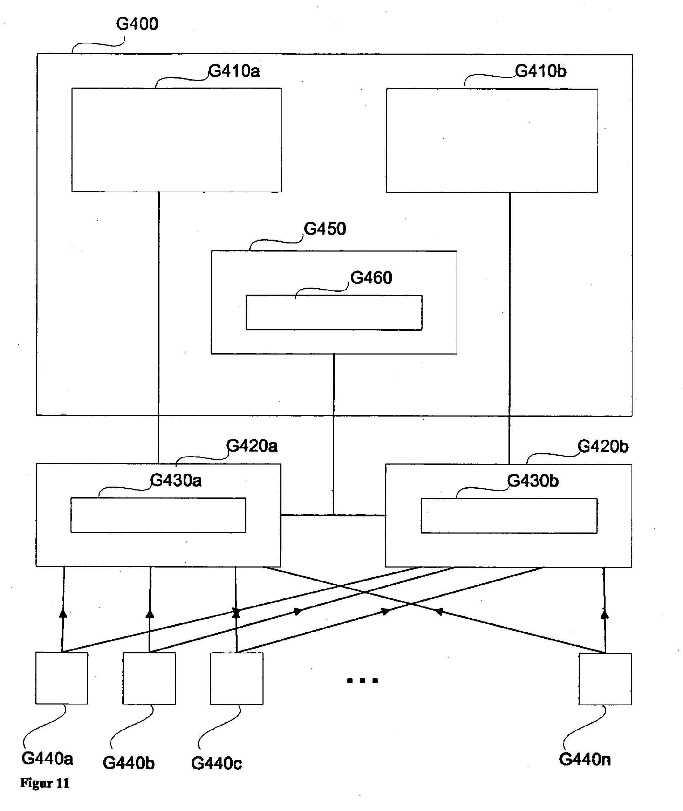

In Figur 11 ist ein Multiprozessorsystem G400 mit zwei Ausführungseinheiten G410a, G410b sowie zwei Interruptcontrollern G420a, G420b inklusive darin enthaltener Interrupt Maskierungsregister G430a, G430b und verschiedener Interruptquellen G440a bis G440n dargestellt. Weiter dargestellt ist eine Umschalt- und Vergleichseinheit G450 mit einem speziellen Interruptmaskierungsregister G460.

Vorteilerweise besitzt jede Ausführungseinheit G410a, G410b ihren eigenen Interruptcontroller G420a, G420b, um im Performanzmodus gleichzeitig zwei Interrupts behandeln zu können. Dies ist besonders in Systemen vorteilhaft, in denen die Interruptbehandlung einen Flaschenhals in der Systemperformanz darstellt. Die Interruptquellen G440a bis G440n werden dabei vorteilhafterweise an beide Interruptcontroller G420a, G420b jeweils gleich angeschlossen. Diese Anschlussart bewirkt, dass ohne weitere Maßnahmen an beiden Ausführungseinheiten G410a, G410b der gleiche Interrupt ausgelöst wird. Im Performanzmodus werden die Interrupt Controller G420a, G420b so programmiert, dass die entsprechenden Interruptquellen G440a bis G440n auf die verschiedenen Ausführungseinheiten G410a, G410b je nach Anwendung geeignet aufgeteilt werden. Dies geschieht mittels einer geeigneten Programmierung der Interrupt Maskierungsregister G430a, G430b. Die Maskierungsregister sehen für jede Interruptquelle G440a bis G440n ein Bit im Register vor. Falls dieses Bit gesetzt ist, wird der Interrupt gesperrt, er wird also nicht an die angeschlossene Ausführungseinheit G410a, G410b weitergeleitet. Günstigerweise wird in einem Performanzmodus eine gegebene Interruptquelle G440a bis G440n von genau einer Ausführungseinheit G410a oder G410b bearbeitet. Vorteilhafterweise gilt dies zumindest für einige der Interruptquellen. Damit kann erreicht werden, dass mehrere Interruptquellen G440a bis G440n gleichzeitig bearbeitet werden können, ohne dass ein Interrupt-Nesting (eine Interrupt Bearbeitung wird durch einen zweiten Interurupt unterbrochen) oder Interrupt-Pending (die Bearbeitung des Zweiten wird verschoben bis die Bearbeitung des ersten beendet ist) stattfindet.

Im Vergleichsmodus muss sichergestellt werden, dass die Interruptcontroller G420a, G420b an allen Ausführungseinheiten G410a, G410b gleichzeitig den gleichen Interrupt auslösen, ansonsten würde, einem Vergleichsmodus entsprechend, auf einen Fehler erkannt werden. Dies bedeutet, dass in der Synchronisierungsphase beim Umschalten vom Performanzmodus in den Vergleichsmodus sichergestellt werden muss, dass die Interrupt Maskierungsregister G430a, G430b identisch sind. Diese Synchronisation ist in der Figur 9 in Schritt G660 beschrieben.

Diese Synchronisation kann per Software durchgeführt werden, indem beide Interruptmaskierungsregister G430a, G430b entsprechend mit dem gleichen Wert programmiert werden. Es wird vorgeschlagen ein spezielles Register G460 zu verwenden, um den Umschaltvorgang zu beschleunigen. In einer Ausführungsform ist dieses Register G460 in der Umschalt- und Vergleichseinheit G460 angeordnet, es kann aber auch in der Umschaltwunscherkennung G40, in einer kombinierten Umschaltwunscherkennung, im Vergleicher, in der Umschalteinheit G80, sowie in allen Kombinationen enthalten sein. Ebenso denkbar ist es, dass dieses Register außerhalb dieser drei Komponenten an einer anderen geeigneten Stelle angeordnet ist. Das Register G460 enthält die Interruptmaskierung, die im Vergleichsmodus gelten soll. Die Umschalt- und Vergleichseinheit G450 erhält von der Umschaltwunscherkennung G40 ein Signal zur Umschaltung von einem Performanz in einen Vergleichsmodus. Nachdem die Interrupts im Schritt G600 gesperrt wurden können, die Interruptmaskierungsregister G430a, G430b der Interruptcontroller G420a, G420b umprogrammiert werden. Dies wird nun per Hardware von der Umschalt und Vergleichseinheit G450 parallel zu den übrigen Synchronisationsschritten durchgeführt, nachdem das Umschaltsignal erhalten wurde und die Interruptcontroller G420a, G420b gesperrt wurden. Günstigerweise werden die Interruptmaskierungsregister G430a, G430b im Vergleichsmodus nicht einzeln umprogrammiert, sondern immer das zentrale Register G460. Dieses wird dann synchron per Hardware auf die beiden Interruptmaskierungsregister G430a, G430b übertragen. Das Verfahren, das hier für ein Interruptmaskierungsregister beschrieben ist, kann in gleicher Weise auf alle Interruptstatusregister, die in einem Interruptcontroller angeordnet sind, übertragen werden. Natürlich ist es auch denkbar, anstelle eines Registers G460 ein anderes Speichermedium zu verwenden, aus dem möglichst schnell auf die Interruptmaskierungsregister G430a, G430b übertragen werden kann.

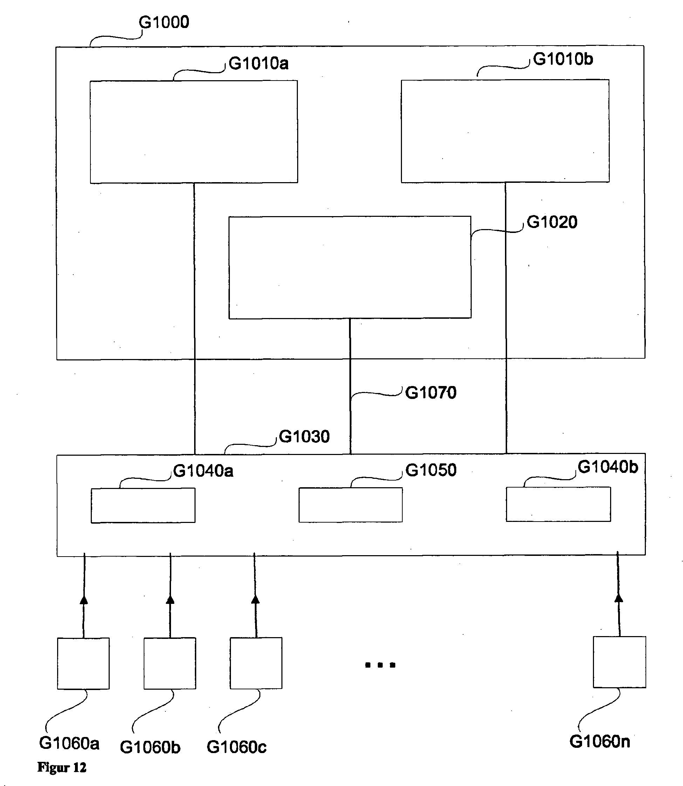

In Figur 12 wird ein Multiprozessorsystem G1000 mit zwei Ausführungseinheiten G1010a, G1010b, einer Umschalt- und Vergleichseinheit G1020, sowie einem Interruptcontroller G1030 mit drei verschiedenen Registersätzen G1040a, G1040b, G1050 vorgeschlagen. Als Alternative zu der oben beschriebenen Lösung wird ein spezieller Interruptcontroller G1030 vorgeschlagen, wie in Figur 12 dargestellt. Dieser wird in einem Multiprozessorsystem G1000 verwendet, das im Beispiel mit zwei Ausführungseinheiten G1010a, G1010b, sowie einer Umschalt- und Vergleichseinheit G1020, die zwischen einem Vergleichs und einem Performanzmodus umschalten kann, dargestellt ist.

Im Performanzmodus werden dabei die Registersätze G1040a, G1040b verwendet. In diesem Fall arbeitet der Interruptcontroller G1030 genau so wie zwei Interruptcontroller G420a, G420b. Dieses verhalten ist in Figur 11 dargestellt und beschrieben. Der Registersatz G1040a ist dabei der Ausführungseinheit G1010a zugeordnet und der Registersatz G1040b der Ausführungseinheit G1010b. Die Interruptquellen G 1 060a bis G1060n werden per Maskierung auf die Ausführungseinheiten G1010a, G1010b geeignet aufgeteilt. Beim Umschalten von einem Performanzmodus in einen Vergleichsmodus erzeugt die Umschalt- und Vergleichseinheit G1020 ein Signal G1070. Dieses signalisiert dem Interruptcontroller G1030, dass in den Vergleichsmodus umgeschaltet wird bzw., dass das System ab diesem Zeitpunkt im Vergleichsmodus arbeitet. Der Interruptcontroller G1030 verwendet danach den Registersatz G1050. Damit ist sichergestellt, dass an beiden Ausführungseinheiten G1010a, G1010b die gleichen Interruptsignale entstehen. Mit einem Wechsel vom Vergleichsmodus in den Performanzmodus, den die Umschalt- und Vergleichseinheit G 1020 wieder über das Signal G1070 dem Interruptcontroller G1030 signalisiert, wird auf die Registersätze G1040a, G1040b wieder umgeschaltet. Günstigerweise kann damit auch ein Schutz der entsprechenden Registersätze erreicht werden, indem im Performanzmodus nur ein Schreiben auf die Registersätze G1040a, G1040b erlaubt ist und ein Schreiben auf den Registersatz G1050, der dem Vergleichsmodus vorbehalten ist, per Hardware unterbunden wird. Gleiches ist auch in der anderen Richtung möglich, dass im Vergleichsmodus nur ein Schreiben auf den Registersatz G1050 erlaubt ist und ein Schreiben auf die Registersätze G1040a, G1040b unterbunden wird.

In Figur 13 ist die einfachste Form eines Vergleichers M500, G20 dargestellt. Eine wesentliche Komponente in einem Multiprozessorsystem G60 mit wenigstens zwei Ausführungseinheiten G10a, G10b mit einer Umschaltung zwischen einem Performanzmodus und einem Vergleichsmodus ist der Vergleicher M500. In der einfachsten Form ist er in Figur 13 dargestellt. Die Vergleichskomponente M500 kann zwei Inputsignale M510 und M511 aufnehmen. Sie vergleicht diese dann auf Gleichheit, im hier dargestellten Kontext vorzugsweise im Sinne einer Bit-weisen Gleichheit. Im Gleichheitsfalle wird der Wert der Inputsignale M510, M511 auf das Outputsignal M520 gegeben und das Fehlersignal M530 wird nicht aktiv, d.h. es signalisiert den "Gut"-Zustand. Falls sie Ungleichheit detektiert, wird das Fehlersignal M530 aktiviert. Das Signal M520 kann dann optional deaktiviert werden. Dies hat den Vorteil, dass der Fehler aus dem entsprechenden System nicht herauskommt ("fault containment"). D.h. andere Komponenten, die außerhalb der Ausführungseinheiten liegen, werden durch das potenziell fehlerhafte Signal nicht korrumpiert. Es gibt jedoch auch Systeme, in denen das Signal M520 nicht deaktiviert werden muss. Dies ist z.B. dann der Fall, wenn auf Systemebene nur Fail-silence gefordert ist. Dann kann das Fehlersignal beispielsweise nach extern geführt werden.

Von diesem Basis-System ausgehend sind eine Vielzahl von Ausführungsformen denkbar. Zunächst kann die Komponente M500 als so genannte TSC- Komponente (totally self checking) ausgeführt werden. In diesem Fall wird das Fehlersignal M530 auf mindestens zwei Leitungen ("dual rail") nach außen geführt, und es ist durch interne Design- und Fehlerentdeckungsmaßnahmen sichergestellt, dass in jedem möglichen Fehlerfall der Vergleichskomponente dieses Signal korrekt oder erkennbar unkorrekt vorliegt. Ein dual rail Signal stellt dabei ein binäres Signal über zwei Leitungen zur Verfügung, vorzugsweise so, dass die beiden Leitungen im fehlerfreien Fall zueinander invertiert sind. Eine bevorzugte Variante in der Benutzung des erfindungsgemäßen Systems ist es, einen solchen TSC-Vergleicher zu verwenden.
Eine zweite Klasse von Ausführungsformen kann dahingehend unterschieden werden, welchen Grad der Synchronität die beiden Inputs M510, M511 (bzw. M610, M611) haben müssen. Eine möglich Ausführungsform ist durch taktweise Synchronität gekennzeichnet, d.h. der Vergleich der Daten kann in einem Takt durchgeführt werden.

Eine leichte Änderung entsteht dadurch, dass bei einem festen Phasenversatz zwischen den Inputs ein synchrones Verzögerungselement verwendet wird, das die entsprechenden Signale beispielsweise um halbzahlige oder ganzzahlige Taktperioden verzögert. Ein solcher Phasenversatz ist nützlich, um Common Cause Fehler zu vermeiden, d.h. solche Fehlerursachen, die mehrere Verarbeitungseinheiten gleichzeitig und gleichartig beeinflussen können.

Figur 14 beschreibt deshalb eine weitere Ausführungsform. Die Komponenten und Signale M600, M610, M611, M620, M630 in haben die gleiche Bedeutung wie die entsprechenden Komponenten und Signale M500, M510, M511, M520, M530 aus Figur 13. In Figur 14 ist daher über diese Komponenten hinaus die Komponente M640 eingefügt, die den zeitlich früheren Input um den Phasenversatz verzögert. Vorzugsweise ist dieses Verzögerungselement im Vergleicher untergebracht, um es nur im Vergleichsmodus zu verwenden.
Alternativ oder ergänzend kann man Zwischenpuffer M650, M651in die Inputkette legen, um solche Asynchronitäten, die sich nicht als reiner Takt- oder Phasenversatz darstellen, ebenfalls tolerieren zu können. Vorzugsweise werden diese Zwischenpuffer als FIFO-Speicher (first-in, first out) ausgelegt. Ein solcher Speicher hat einen Eingang und einen Ausgang und kann mehrere Speicherworte speichern. Ein einkommendes Speicherwort wird bei Eintreffen eines neuen Speicherworts in seiner Stelle verschoben. Nach der letzten Stelle (der Tiefe des Puffers) wird es "aus dem Speicher hinaus" verschoben. Falls ein solcher Puffer vorliegt, kann man auch Asynchronitäten bis zur maximalen Tiefe des Puffers tolerieren. In diesem Fall muss ein Fehlersignal auch dann ausgegeben werden, wenn der Puffer überläuft.

Weiter kann man im Vergleicher Ausführungsformen danach unterscheiden, wie das Signal M520 (oder M620) generiert wird. Eine bevorzugte Ausführungsform ist es, die Inputsignale M510, M511 (bzw. M610, M611) auf den Ausgang zu legen und die Verbindung durch Schalter unterbrechbar zu machen. Der besondere Vorteil dieser Ausführungsform ist es, dass zur Umschaltung zwischen Performanzmodus und möglichen verschiedenen Vergleichsmodi dieselben Schalter verwendet werden können. Alternativ können die Signale auch aus vergleicherinternen Zwischenspeichern generiert werden.

Eine letzte Klasse von Ausführungsformen kann dahingehend unterschieden werden, wie viele Inputs am Vergleicher vorliegen und wie der Vergleicher reagieren soll. Bei drei Inputs kann ein Majoritätsvoting, ein Vergleich von allen drei oder ein Vergleich von nur zwei Signalen vorgenommen werden. Bei vier oder mehr Inputs sind entsprechend mehr Ausführungsformen denkbar. Eine ausführliche Beschreibung der möglichen Ausführungsformen ist in der Beschreibung von Figur 20 enthalten.

Die genaue Wahl der Ausführungsformen ist vorzugsweise mit den verschiedenen Betriebsmodi des Gesamtsystems zu koppeln. D.h., wenn es mehrere verschiedene Performanz- oder Vergleichsmodi gibt, dann sind diese vorzugsweise mit dem entsprechenden Modus des Vergleichers gekoppelt.

An einigen Stellen in dieser Erfindung ist es notwendig oder vorteilhaft, einen Vergleicher oder ein allgemeineres Voting-/Verarbeitungs-/Sortierelement zu deaktivieren oder passiv zu machen (im Folgenden der Einfachheit halber immer als Vergleicher bezeichnet). Dazu gibt es viele Möglichkeiten. Zum einen kann man an den Vergleicher ein Signal führen, mit er aktiviert oder deaktiviert wird. Dazu ist im Vergleicher eine zusätzliche Logik einzufügen, die dies durchführen kann. Eine weitere Möglichkeit ist es, dem Vergleicher keine zu vergleichenden Daten zuzuführen. Eine dritte Möglichkeit ist es, auf Systemebene das Fehlersignal des Vergleichers zu ignorieren. Weiter kann man auch das Fehlersignal selbst unterbrechen. Allen Möglichkeiten ist gemeinsam, dass es im System keine Rolle spielt, dass zwei oder mehr Daten, die potenziell verglichen werden, verschieden sind. Falls dies der Fall ist, wird der Vergleicher als passiv oder deaktiviert betrachtet.

Im Weiteren wird eine Implementierung eines Umschalters in Verbindung mit einem Vergleicher, also einer Umschalt- und Vergleichseinheit G70 betrachtet. Diese Implementierung ist besonders günstig, falls diese zusammen mit den Ausführungseinheiten G10a, G10b innerhalb eines Chips ausgeführt sind.

Durch Zusammenfassung der Komponenten Vergleicher und Umschalter entsteht nur ein sehr kleiner Hardwareoverhead bei Implementierung innerhalb eines Chips. Eine bevorzugte Variante der Implementierung ist es deshalb, diese beiden Teile in einer Komponente zusammenzufassen. Dies ist eine Komponente mit mindestens den Eingangssignalen (Output Ausführungseinheit 1, Output Ausführungseinheit 2), mindestens den Ausgangssignalen (Output 1, Output 2), einem logischen Outputsignal "Output gesamt" (kann physikalisch mit Output 1 oder Output 2 übereinstimmen) und einem Vergleicher. Die Komponente hat die Fähigkeit den Modus umzuschalten, im Performanzmodus alle Signale durchlassen, und in einem Vergleichs-Modus mehrere Signale zu vergleichen und ggf. eines durchlassen. Zusätzlich sind noch weitere Eingangs- und Ausgangssignale vorteilhaft: Ein Fehlersignal zur Signalisierung eines detektierten Fehlers, ein Modussignal um den Modus zu signalisieren, in dem diese Komponente sich befindet, und Steuersignale von und zu der Komponente.

In einem bevorzugten Ausführungsbeispiel sind die zwei oder mehr Ausführungseinheiten im Performanzmodus als Master an einen prozessorinternen Bus angeschlossen. Die Vergleichseinheit ist deaktiviert oder das Fehlersignal, das bei einem unterschiedlichen Verhalten der Ausführungseinheiten in einem der denkbaren Vergleichsmodi erzeugt wird, ist maskiert. Dies bedeutet, dass die Umschalt und Vergleicheinheit für die Software transparent ist. In dem betrachteten Vergleichsmodus werden die zu vergleichenden physikalischen Ausführungseinheiten als eine logische Ausführungseinheit am Bus behandelt, d.h. es tritt nur ein Master am Bus auf. Das Fehlersignal des Vergleichers ist aktiviert. Die Umschalt und Vergleichseinheit trennt dazu alle bis auf eine Ausführungseinheit über Schalter vom prozessorinternen Bus ab, dupliziert die Eingaben der einen logischen Ausführungseinheit und stellt diese allen am Vergleichsmodus beteiligten Ausführungseinheiten zur Verfügung. Beim Schreiben auf den Bus werden die Ausgaben in der Vergleicheinheit verglichen und bei Gleichheit werden diese Daten über den einen vorhanden Zugang zum Bus geschrieben.

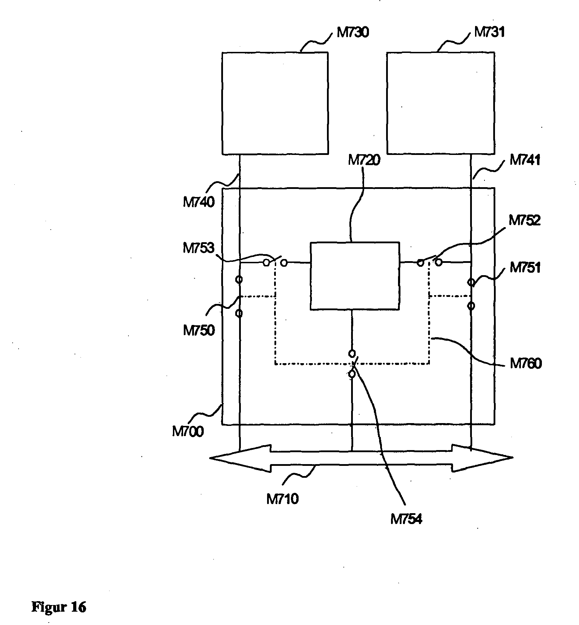

In Figur 15 und Figur 16 ist das prinzipielle Verhalten der bevorzugten Komponente M700 (Umschalt- und Vergleichseinheit, entspricht G70) beschrieben. Der Einfachheit halber ist diese Figur nur für zwei Ausführungseinheiten gezeichnet. Figur 15 zeigt dabei den Status der Komponente im Vergleichsmodus, Figur 16 im Performanzmodus. Die verschiedenen Schalterstellungen in diesen Modi werden von M700 durch die Ansteuerung M760 realisiert. Die beiden Ausführungseinheiten M730, M731 können zunächst im Performanzmodus auf den Daten- und Adressbus M710 schreiben, wenn die Schalter M750 und M751 geschlossen sind, wie in Figur 16 gezeigt. Es wird vorausgesetzt, dass eventuelle Schreibkonflikte entweder über das Busprotokoll oder durch weitere, nicht eingezeichnete Komponenten aufgelöst werden. Im Vergleichsmodus ist das Verhalten zumindest aus logischer Sicht ein anderes. Wie in Figur 15 gezeigt, sind dann die Schalter M750, M751 geöffnet und somit die direkten Zugriffsmöglichkeiten unterbrochen. Im Gegensatz zu Figur 16 sind in Figur 15 dann allerdings die Schalter M752, M753 geschlossen. Die Signale M740, M741 der Ausführungseinheiten M730, M731 werden an die Vergleichskomponente M720 geleitet. Diese ist mindestens so aufgebaut, wie in Figur 13 gezeichnet, sie kann aber auch Erweiterungen, wie in Figur 14 beschrieben, beinhalten. Auf eine Darstellung des Fehlersignals oder auch weiterer Signale der Vergleichskomponente M720 wird in Figur 15, und Figur 16 aber verzichtet. Falls die beiden Signale übereinstimmen, wird der Schalter M754 geschlossen, und eines der beiden übereinstimmenden Signale dann auf den Adress/Datenbus M710 weitergeleitet. In Summe ist es dazu notwendig, dass die Umschalt- und Vergleichseinheit M700 die Schalter M750-M754 beeinflussen kann. Die jeweilige Schalterstellung ist abhängig vom Modus und von der Fehlererkennung. Varianten, in denen der Schalter M754 immer geschlossen ist, und eine geeignete Systemreaktion durch das Fehlersignal erzeugt wird, sind hiermit auch abgedeckt.

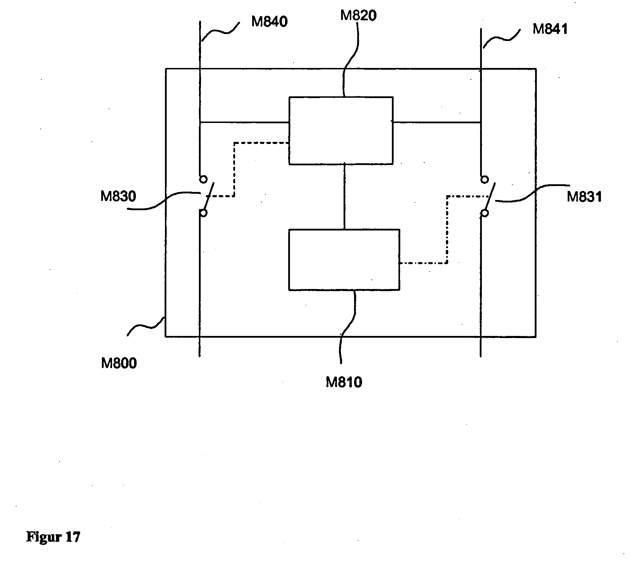

In Figur 17 ist eine Variante der Umschalt und Vergleichseinheit dargestellt. Auch schon für ein einfaches System mit nur zwei Ausführungseinheiten G10a, G10b gibt es viele Varianten der Implementierung einer Umschalt- und Vergleichseinheit. Eine weitere, die besonders vorteilhaft ist, wenn keine Puffer im Vergleicher zu verwenden sind, ist in Figur 17 gezeigt Wie in Figur 15, Figur 16 gibt es die Signale M840, M841 der Ausführungseinheiten. Letztere sind in dieser Figur nicht gezeichnet. In der erfindungsgemäßen Komponente M800 gibt es eine Moduslogik M810, die den Modus der Komponente vorgibt. Im Performanzmodus schließt sie den Schalter M831, im Vergleichsmodus öffnet sie ihn. Weiter gibt sie das Modussignal an den Vergleicher M820. Dieser vergleicht in dieser Implementierung immer, benutzt aber das Ergebnis des Vergleichs und das Modussignal, um den Schalter M830 anzusteuern. Im Performanzmodus ist der Schalter immer geschlossen, im Vergleichsmodus immer dann, wenn kein Fehler vorliegt. Natürlich kann auch, falls einmal ein Fehler festgestellt wurde, der Schalter weiterhin geöffnet bleiben, bis ein entsprechender Reset kommt.

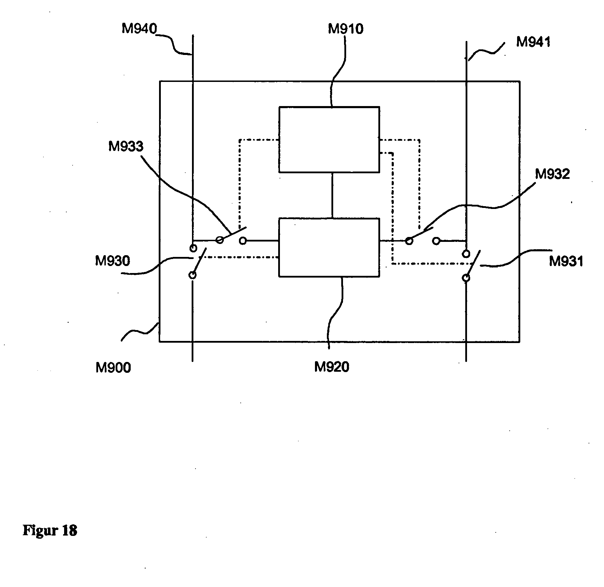

In Figur 18 ist eine weitere Ausführungsform der Umschalt und Vergleichseinheit dargestellt. Diese Alternative, verfügt zwar über mehr Schalter, lässt dafür aber den Vergleicher im Performanzmodus inaktiv und kann deshalb auch leichter mit Asynchronitäten umgehen. Wieder gibt es die beiden Signale M940, M941 der Ausführungseinheiten. Letztere sind wieder in diesem Bild nicht gezeichnet. In der erfindungsgemäßen Komponente M900 gibt es eine Moduslogik M910, die den Modus der Komponente vorgibt. Im Performanzmodus schließt sie den Schalter M931 und öffnet die Schalter M932, M933. Damit wird die Vergleichskomponente M920 in diesem Modus nicht mit Daten beschickt. Dies erlaubt bei Asynchronitäten längere Pufferzeiten, bzw. in einer Implementierung geringere Puffertiefen. Im Performanzmodus ist der Schalter M930 immer geschlossen. Im Vergleichsmodus schließt die Komponente M910 die Schalter M932, M933 und unterbricht den direkten Zugriff auf den Bus durch Öffnen des Schalters M931. Optional kann die Moduslogik M910 dem Vergleicher M920 den Modus noch mitteilen. Im Vergleichsmodus ist im fehlerfreien Fall der Schalter M930 geschlossen. Im Fehlerfall unterbricht die Vergleichskomponente M920 die Weiterleitung des Signals M940 auf den Bus durch Öffnen des Schalters M930.

In den beschriebenen Zeichnungen ist es ohne Aufwand möglich, die Modus oder Fehlersignale nach außen zu leiten. Es ist weiter, insbesondere zur Generierung des internen Moduszustands, problemlos möglich, dass weitere Signale an die Komponente gehen.

Zusammenfassend ist eine bevorzugte Implementierung dieser Komponente also **dadurch gekennzeichnet, dass** es mehrere Verarbeitungseinheiten gibt, die Ausgangssignale auf den Bus (z.B. Adress/Daten-Bus) schreiben können. Wesentlich ist, dass die Komponente mindestens zwei der Ausgangssignale der Ausführungseinheiten verarbeiten kann (z.B. vergleichen, aber eventuell auch voten oder sortieren) und dass die Komponente mindestens einen Schalter beeinflussen kann, mit dem mindestens einer der direkten Buszugriffe unterbrochen wird.

Besonders nützlich ist dies, wenn die Ausführungseinheiten Rechnerkerne sind. Weiterhin ist es vorteilhaft, wenn der Zustand der beeinflussbaren Schalter den Betriebsmodus der Recheneinheit charakterisiert.

Die Systemeigenschaften, insbesondere die möglichen Vergleichsmodi, werden dann besonders gut umgesetzt, wenn die Komponente ein Signal auf den Adress-Datenbus legen kann. Vorteilhafterweise ist dieses eine Durchschaltung eines der Ausgangssignale einer der Ausführungseinheiten. Alternativ kann dies aus der Verarbeitung verschiedener Ausgangssignale der verschiedenen Ausführungseinheiten entstehen.

Wie beispielsweise schon in den Beschreibungen zu den Figuren Figur 17, Figur 18 deutlich wurde, kann man im System und - je nach Einteilung in die Komponenten - auch in einer der Komponenten eine Modus-Information identifizieren. Diese Modusinformation kann je nach Implementierung sogar explizit in einer Teilkomponente vorliegen. In einer bevorzugten Implementierung kann dieses Signal auch aus der Komponente herausgeführt werden und anderen Teilen des Systems zur Verfügung gestellt werden.

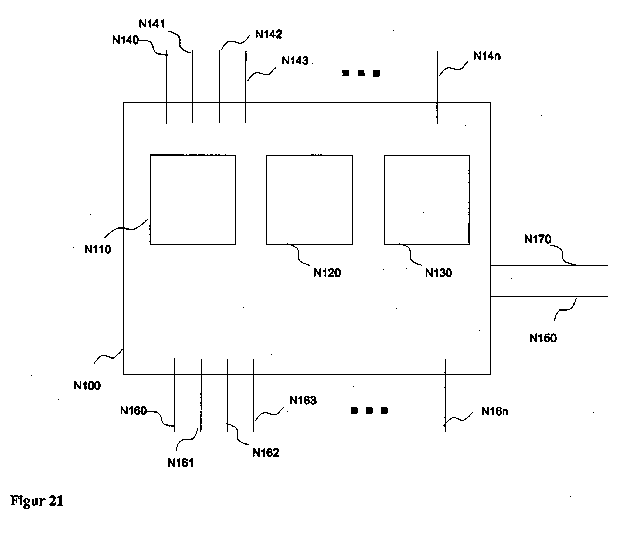

Im allgemeinen Fall kann man das erfindungsgemäße Verhalten an Figur 21 erläutern. Die Signale und Komponenten N100, N110, N120, N130, N140, N141, N142, N143, N14n, N160, N161, N162, N163, N16n haben die gleiche Bedeutung wie in Figur 20. Darüber hinaus ist das Modussignal N150 und das Fehlersignal N170 in dieser Figur eingezeichnet. Das optionale Fehlersignal wird von der Fehlerschaltungslogik N130, die die Fehlersignale sammelt, generiert und ist entweder eine direkte Weiterleitung der Einzelfehlersignale oder eine Bündelung der darin enthaltenen Fehlerinformation. Das Modussignal N150 ist optional, seine Verwendung außerhalb dieser Komponente kann aber an vielen Stellen vorteilhaft sein. Die Kombination der Information der Schaltlogik N110 (d.h. die in der Beschreibung von Figur 20 beschriebene Funktion) und der Verarbeitungslogik (d.h. die Festlegung der Vergleichsoperation pro Ausgangssignal, d.h. pro Funktionswert) ist die Modusinformation und diese legt den Modus fest. Diese Information ist im allgemeinen Fall natürlich mehrwertig, d.h. nicht nur über ein logisches Bit darstellbar. Nicht alle theoretisch denkbaren Modi sind in einer gegebenen Implementierung sinnvoll, man wird vorzugsweise die Zahl der erlaubten Modi einschränken. Das Modussignal bringt dann die relevante Modusinformation nach außen. Eine HW-Implementierung ist vorzugsweise so dargestellt, dass das extern sichtbare Modussignal konfiguriert werden kann. Vorzugsweise sind ebenfalls die Verarbeitungslogik und die Schaltlogik konfigurierbar gestaltet. Vorzugsweise sind diese Konfigurationen aufeinander abgestimmt. Alternativ kann man auch nur oder ergänzend Änderungen des Modussignals nach außen geben. Dies hat insbesondere in einer Zweierkonfiguration Vorteile.

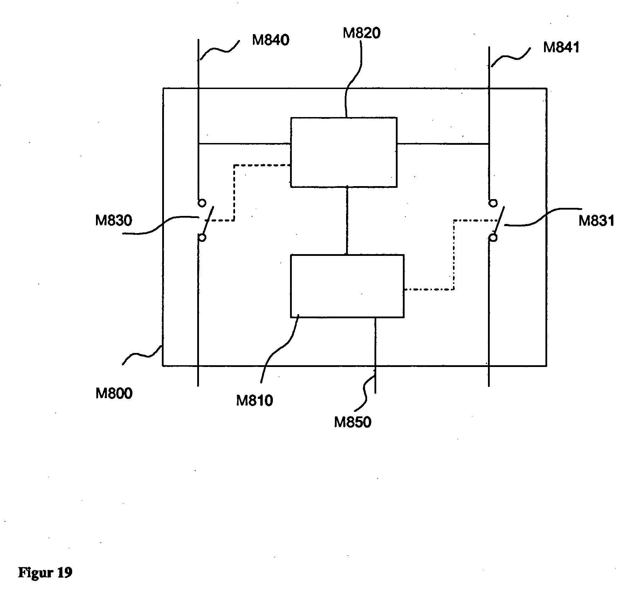

Vorzugsweise wird dieses Modussignal abgesichert. Eine Implementierung im Zweier-System wird, beispielsweise basierend auf der Implementierung, die in Figur 17 dargestellt ist, in Figur 19 dargestellt. Dort wird das Signal M850 aus der Umschalt und Vergleichseinheit herausgeführt. In einem Zweier-System ist diese Information logisch über ein Bit darstellbar. Eine Absicherung kann dann vorzugsweise über ein dual-rail-Signal dargestellt werden. Im allgemeinen Fall kann man das Signal ebenfalls über eine Verdoppelung, die optional invertiert ist absichern. Alternativ kann man auch ein Parity generieren, das vorzugsweise intern eigensicher generiert wird, oder einen CRC (cyclic redundancy check) oder ECC (error correcting code) verwenden.

Das Modussignal kann außerhalb der Komponente verwendet werden. Zunächst kann es zur Eigenüberwachung des Betriebssystems verwendet werden. Dieses ist aus SW-Sicht für einen Umschaltung verantwortlich und sollte immer wissen, in welchem Modus sich das System befindet und das System auch in diesen Modus bringen. Eine Überprüfung dieses Signals kann damit zur Absicherung verwendet werden. Dies kann zunächst direkt geschehen. Eine alternative Möglichkeit ist es aber auch, über Timer oder andere "unabhängige" Einheiten eine Anfrage beim Betriebssystem mit diesem Signal zu plausibilisieren.

Allgemein kann dieses Signal optional auch in anderen Datensenken eines µC (oder allgemeineren Recheneinheit) verwendet werden. Beispielsweise kann eine MPU (memory protection unit) so programmiert sein, dass sie bestimmte Speicherzugriffe (von bestimmten Ausführungseinheiten) nur in bestimmten Modi erlaubt. Eine MPU ist dabei eine Einheit, die sicherstellen kann, dass nur erlaubte Zugriffe auf den Daten/Adressbus durchgeführt werden, beispielsweise indem sie für bestimmte Programmteile den Zugriff auf bestimmte Adressräume unterbindet. Durch eine Hinführung des Modussignals an die MPU, entsprechende Konfiguration und Programmierung dieser MPU, und Auswertung dieser Konfigurationsdaten und des Modussignals, kann eine zusätzliche Absicherung erfolgen. Unter Umständen vereinfacht das sogar die Programmierung, falls das Modussignal schon eine ausreichende Information zur Überprüfung ist. Dann reicht eine quasi-statische Programmierung zur Initialisierungszeit des µC aus. Entsprechendes kann für Peripherieeinheiten gelten. Auch hier gibt es Anwendungen, bei denen ein Zugriff auf ein entsprechendes Peripherieelement nur in bestimmten Modi erlaubt ist. Durch eine Hinführung des Modussignals an das Peripherieelement, entsprechende Konfiguration und Programmierung des Peripherieelements, und Auswertung dieser Konfigurationsdaten und des Modussignals, kann eine zusätzliche Absicherung erfolgen. Unter Umständen vereinfacht das sogar die Programmierung, falls das Modussignal schon eine ausreichende Information zur Überprüfung ist. Dann reicht eine quasi-statische Programmierung zur Initialisierungszeit des µC aus. Analog kann die Auswertung dieses Signals auch am Interruptcontroller verwendet werden. Solche Überwachungen können dann die Basis oder einen wesentlichen Bestandteil des Sicherheitskonzepts ausmachen. Durch geeignete Ausführung und SW-Strukturierung kann es möglich sein, das Sicherheitskonzept für eine ganze Fehlerklasse in der betrachteten Anwendung auf diesem Modus-Signal aufzubauen. Dies ist insbesondere dann vorteilhaft, wenn das Modus-Signal in einer geeigneten Form, wie oben beschrieben, eigensicher ist. Es ist in diesem Fall dann weiter vorteilhaft, wenn die betrachtete Komponente die Möglichkeit hat, ein Fehlersignal zu senden oder einen Abschaltpfad zu betätigen, falls sie eine Unstimmigkeit zwischen dem Modus-Signal und dem Zugriff auf sich selbst detektiert.

Ein wesentlicher weiterer Verwendungszweck ist die Auswertung des Modus-Signals außerhalb der Recheneinheit. Eine direkte Anwendung ist die Auswertung in einem dekrementierenden Watchdog. Ein solcher "Watch-Dog" besteht aus mindestens einem (Zähler-)Register, welches durch den Mikroprozessor auf einen Integer Wert gesetzt werden kann. Nach dem Setzen dieses Registers dekrementiert der "Watch-Dog" selbstständig den Wert des Registers mit einer festen Periode. Ist der Wert des Registers Null oder tritt ein Überlauf auf, erzeugt der "Watch-Dog" ein Fehlersignal. Soll das Fehlersignal nicht erzeugt werden, so muss der Mikroprozessor den Wert des Registers rechtzeitig wieder zurücksetzen. Damit kann (in Grenzen) überprüft werden, ob der Mikroprozessor die Software korrekt ausführt. Führt der Mikroprozessor die Software nicht mehr korrekt aus, wird angenommen, dass in diesem Fall auch der "Watch-Dog" nicht mehr korrekt bedient wird und somit ein Fehlersignal vom "Watch-Dog" erzeugt wird. Die Integrität der Hardware und der Datenstrukturen kann zuverlässig in einem Vergleichsmodus überprüft werden, dazu muss aber sichergestellt sein, dass der Mikroprozessor regelmäßig wieder in diesen zurückschaltet. Aufgabe des hier beschriebenen "Watch-Dog" ist es daher, nicht nur ein Fehlersignal zu erzeugen, wenn er innerhalb eines definierten Zeitraumes nicht mehr zurückgesetzt wird, sondern auch, wenn der Mikroprozessor innerhalb eines definierten Zeitraums nicht mehr in den definierten Vergleichsmodus zurückschaltet. Beispielsweise kann der "Watch-Dog" nur dann zurückgesetzt werden, wenn das Modus Signal den definierten Vergleichsmodus der Recheneinheit anzeigt. Damit ist sichergestellt, dass die Recheneinheit regelmäßig in diesen Modus zurückschaltet. Alternativ oder ergänzend wird der Wert im Register des "Watch-Dog" erst dann dekrementiert, wenn bestimmte Interrupts beim Mikroprozessor ausgelöst werden. Dazu müssen die externen Interruptsignale des µC auch an den Watchdog gekoppelt werden. Im Watchdog ist gespeichert, welche Interrupts den µC in den definierten Vergleichsmodus schalten. Der Watchdog wird "aufgezogen", sobald ein solcher Interrupt kommt, er wird zurückgesetzt durch das Vorhandensein des korrekten Modus Signals.

Ganz allgemein ist es nützlich, insbesondere in der Anwendung auf ein Sicherheitskonzept, das Modus-Signal in einer µC-externen Quelle auszuwerten. Ein wesentlicher Punkt in der Absicherung des korrekten Ablaufs der Software auf einem Rechner, wie er in der Erfindung beschrieben ist, ist der korrekte Wechsel zwischen den verschiedenen erlaubten Modi. Zunächst soll die Wechselfähigkeit selbst überprüft werden, vorzugsweise auch noch das korrekte Wechseln. Wie oben beschrieben, kann man auch daran interessiert sein, dass ein spezieller Modus regelmäßig angenommen wird. Besonders vorteilhaft ist ein solches Verfahren immer dann, wenn das Modus-Signal selbst eigensicher ausgestaltet ist.
Eine Möglichkeit ist es das Modus-Signal an einen ASIC oder einen anderen µC zu leiten. Dieser kann über Timer und einfache Logik unter Verwendung dieses Signals mindestens folgende Punkte überprüfen:
Kommt die Recheneinheit hinreichend oft (z.B. spätestens alle 1000µs) in einen oder mehrere definierte Modi?
Wird beim Wechsel in einen Modus immer ein bestimmtes Signal ausgegeben?
Geht die Recheneinheit regelmäßig aus einem Modus heraus?
Sind bestimmte einfache Muster der Abfolge der Modi gültig?
Ist ein allgemeines zeitliches Muster gültig (z.B. im Durchschnitt <70% im Modus 1 und <50% im modus 2)
Irgendeine Kombination von logischen, zeitlichen Eigenschaften des Modus-signals, gegebenenfalls ergänzt durch Verwertung zusätzlicher Signale.

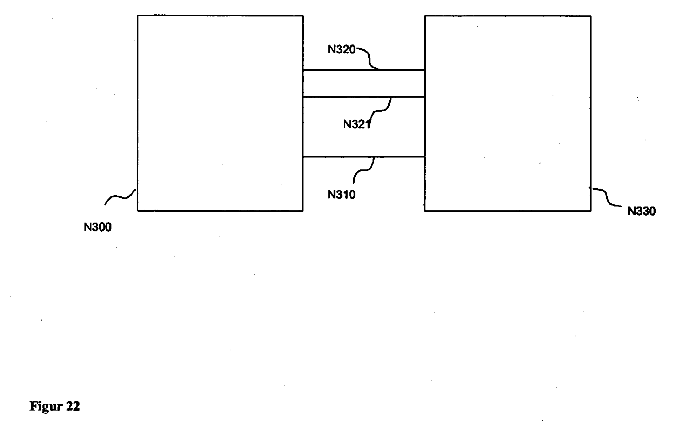

In Figur 22 ist dabei die Basiskonfiguration für einen darüber hinaus gehenden Vorschlag beschrieben. In dem zwischen einem solchen Partner-ASIC oder -µC und der betrachteten Recheneinheit, die über diese Erfindung verfügt, ein spezielles Frage-Antwort-Spiel durchgeführt wird. N300 ist eine Recheneinheit, die ein solches Modus-Signal aussenden kann. Dies kann beispielsweise ein µC sein mit mehreren Ausführungseinheiten und einer anderen Komponente, die dieses Modussignal generieren kann. Beispielsweise kann diese andere Komponente wie in Figur 19 oder Figur 21 realisiert sein. N300 gibt dieses Signal N310 an den Partner (z.B. andere Recheneinheit, anderer µC oder ASIC) N330. Dieser kann über das Signal N320 Fragen an N300 stellen, die N300 über N321 zu beantworten hat. Eine solche Frage kann eine Rechenaufgabe sein, deren korrektes Ergebnis über N321 von N300 innerhalb eines definierten Zeitintervalls zu liefern ist. N330 kann die Korrektheit dieses Ergebnisses unabhängig von N300 prüfen. Beispielsweise sind die Ergebnisse in N330 gespeichert oder N330 kann sie selbst ausrechnen. Bei Detektion eines nicht korrekten Werts wird auf einen Fehler erkannt. Das Besondere an der vorgeschlagenen Frage-Antwort-Kommunikation ist es, dass ein parallel zur Antwort das Modus-Signal beobachtet wird. Vorzugsweise sind die Fragen so zu stellen, dass zur Beantwortung durch N300, diese bestimmte Modi einnehmen muss. Damit kann zuverlässig überprüft werden, dass alle Modus-Wechsel funktionsfähig sind, und dass im Programmablauf vorgesehene Moduswechsel auch durchgeführt werden. Insbesondere bei der Initialisierung eines Systems, aber auch im Betrieb, kann dies als wesentlicher Baustein eines Sicherheitskonzepts dienen.

Eine weitere Anwendung dieser Idee ist die Auswertung des Modus-Signals in einer Aktoransteuerung. In vielen Anwendungen im Automobilbereich ist heute ein Trend zu so genannten intelligenten Aktoren. Dies sind Aktoren mit einem minimalen Elektronikumfang, der ausreicht, ein Aktor-Stellkommando zu empfangen, und den Aktor dann so anzusteuern, dass dieses Stellkommando dann auch ausgeführt wird.

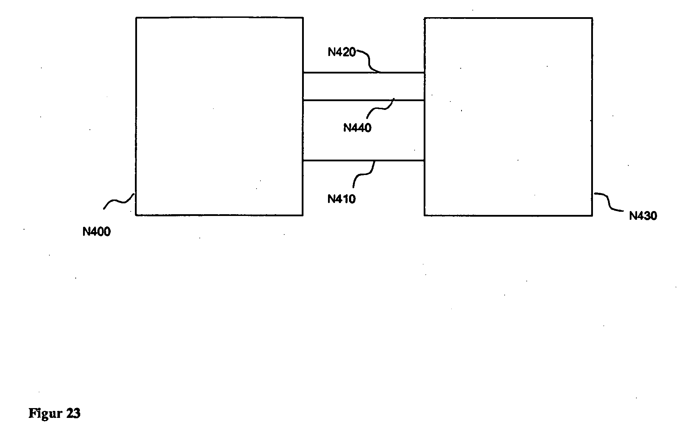

Die Basisidee ist in Figur 23 dargestellt. Eine Recheneinheit N400, die über die Erfindung verfügt, gibt an einen (intelligenten) Aktor oder eine Aktoransteuerung N430 ein Stellkommando über die Verbindung N420. Parallel gibt sie das Modus-Signal an diesen Aktor über die Verbindung N410. Der Aktor N430 prüft anhand des Modus-Signals, ob die Ansteuerung erlaubt ist und gibt optional über das Signal N440 einen Fehlerstatus zurück. Bei fehlerhafter Ansteuerung nimmt er den im System unkritischen Fail-silence Zustand ein.

## Patentansprüche

1. Verfahren zur Erzeugung eines Signals bei einem Rechnersystem mit mehreren Komponenten, wobei wenigstens zwei Ausführungseinheiten als zwei Komponenten vorgesehen sind und als weitere Komponente ein Umschaltmittel vorgesehen ist, wobei bei dem Rechnersystem zwischen wenigstens zwei Betriebsmodi umgeschaltet wird und ein erster Betriebsmodus einem Vergleichsmodus und ein zweiter Betriebsmodus einem Performanzmodus entspricht, **dadurch gekennzeichnet, dass** durch die Umschaltmittel im Performancemodus die Ausführungseinheiten mit einem Bus verbunden werden und dass durch die Umschaltmittel im Vergleichsmodus die Ausführungseinheilten mit einer Vergleichseinheit verbunden werden, und dass im Umschaltmittel ein Modussignal, das den gerade vorliegenden Betriebsmodus und/oder Änderungen eines Modussignals anzeigt, erzeugt wird und dass wenigstens die Änderungen des Modussignals und/oder das Modussignal selbst außerhalb der Umschaltmittel zur Verfügung gestellt wird.

2. Verfahren nach Anspruch 1, **dadurch gekennzeichnet, dass** das Modussignal und/oder die Änderungen des Modussignals zur Überwachung verwendet werden in dem eine vorliegende, einen Betriebsmodus repräsentierende Information mit einer durch das Modussignal und/oder die Änderungen des Modussignals dargestellte oder aus diesen abgeleitete Information verglichen wird.

3. Verfahren nach Anspruch 1, **dadurch gekennzeichnet, dass** das Modussignal und/oder die Änderungen des Modussignals in einer weiteren Komponente des Rechnersystems ausgewertet wird.

4. Verfahren nach Anspruch 1, **dadurch gekennzeichnet, dass** das Modussignal und/oder die Änderungen des Modussignals in einer zu den Ausführungseinheiten peripheren Komponente ausgewertet wird.

5. Verfahren nach Anspruch 1, **dadurch gekennzeichnet, dass** das Modussignal und/oder die Änderungen des Modussignals in einer Speicherschutzeinheit (MPU) ausgewertet wird.

6. Verfahren nach Anspruch 1, **dadurch gekennzeichnet, dass** das Modussignal und/oder die Änderungen des Modussignals in einem Interruptcontroller ausgewertet wird.

7. Verfahren nach Anspruch 1, **dadurch gekennzeichnet, dass** das Rechnersystem ein Betriebssystem enthält und das Modussignal und/oder die Änderungen des Modussignals zur Eigenüberwachung des Betriebssystems verwendet werden indem eine im Betriebssystem vorliegende, einen Betriebsmodus repräsentierende Information mit einer durch das Modussignal und/oder die Änderungen des Modussignals dargestellte oder aus diesen abgeleitete Information verglichen wird.

8. Verfahren nach Anspruch 1, **dadurch gekennzeichnet, dass** das Modussignal und/oder die Änderungen des Modussignals durch wenigstens eine Zusatzinformation abgesichert wird.

9. Verfahren nach Anspruch 1, **dadurch gekennzeichnet, dass** das Modussignal und/oder die Änderungen des Modussignals **dadurch** abgesichert wird, dass das Modussignal und/oder die Änderungen des Modussignals wenigstens gedoppelt wird.

10. Verfahren nach Anspruch 1, **dadurch gekennzeichnet, dass** das Modussignal und/oder die Änderungen des Modussignals als dual-rail-signal abgesichert werden.

11. Verfahren nach Anspruch 1, **dadurch gekennzeichnet, dass** als Umschaltmittel eine kombinierte Umschalt- und Vergleichseinheit vorgesehen ist und das Modussignal und/oder die Änderungen des Modussignals in dieser Umschalt- und Vergleichseinheit erzeugt werden.

12. Verfahren nach Anspruch 1, **dadurch gekennzeichnet, dass** das Modussignal und/oder die Änderungen des Modussignals in wenigstens einer Ausführungseinheit erzeugt werden.

13. Verfahren nach Anspruch 1, **dadurch gekennzeichnet, dass** das Modussignal und/oder die Änderungen des Modussignals in einer Komponente erzeugt werden, die eine kombinierte Umschalt- und Vergleichseinheit sowie eine Einheit zur Umschaltwunscherkennung umfasst.

14. Verfahren nach Anspruch 1, **dadurch gekennzeichnet, dass** mehr als zwei Betriebsmodi vorgesehen sind, zwischen denen umgeschaltet werden kann.

15. Verfahren nach Anspruch 1 oder 15, **dadurch gekennzeichnet, dass** zur Anzeige des jeweiligen Betriebsmodus ein konfigurierbares Betriebsmoduskennzeichen vorgesehen ist.

16. Verfahren nach Anspruch 1 oder 15, **dadurch gekennzeichnet, dass** zur Anzeige des jeweiligen Betriebsmodus eine konfigurierbare Zeigervariable vorgesehen ist.

17. Verfahren nach Anspruch 1, **dadurch gekennzeichnet, dass** basierend auf dem Modussignal und/oder der Änderungen des Modussignals eine Fehlererkennung durchgeführt wird, wobei im Rahmen dieser Fehlererkennung wenigstens ein Fehlersignal erzeugt wird.

18. Verfahren nach einem der vorgehenden Ansprüche, **dadurch gekennzeichnet, dass** die Auswertung des Modussignals für einen Sicherheitsnachweis verwendet wird.

19. Verfahren nach einem der vorhergehenden Ansprüche, **dadurch gekennzeichnet, dass** das Modus Signal derart mehrwertig ist, dass mehr als zwei Modi durch das Modus-Signal darstellbar sind.

20. Verfahren nach Anspruch 1 oder 15, **dadurch gekennzeichnet, dass** in einem Vergleichsmodus ein Voting verwendet wird.

21. Verfahren nach Anspruch 1 oder 15, **dadurch gekennzeichnet, dass** in einem Vergleichsmodus ein fehlertoleranter Algorithmus verwendet wird.

22. Umschaltvorrichtung für ein Rechnersystem mit wenigstens zwei Ausführungseinheiten wobei bei dem Rechnersystem zwischen wenigstens zwei Betriebsmodi umgeschaltet wird und ein erster Betriebsmodus einem Vergleichsmodus und ein zweiter Betriebsmodus einem Performanzmodus entspricht **dadurch gekennzeichnet, dass** Umschaltmittel vorgesehen sind, die im Performancemodus die Ausführungseinheiten mit einem Bus verbinden und dass die Umschaltmittel im Vergleichsmodus die Ausführungseinheiten mit einer Vergleichseinheit verbinden, und dass im Umschaltmittel ein Modussignal, das den gerade vorliegenden Betriebsmodus und/oder Änderungen des Modussignals anzeigt, erzeugt wird und dass die Umschaltmittel wenigstens die Änderungen des Modussignals und/oder das Modussignal selbst außerhalb der Umschaltmittel zur Verfügung stellen.

23. Vorrichtung nach Anspruch 22, **dadurch gekennzeichnet, dass** das Modus Signal derart erzeugt wird, dass mehr als zwei Modi durch das Modus-Signal darstellbar sind.

24. Vorrichtung nach Anspruch 22 oder 23, **dadurch gekennzeichnet, dass** wie Bedeutung oder die Schnittstellensyntax des Modussignals konfigurierbar sind.

## Claims

1. Method for generating a signal in a computer system having a plurality of components, wherein at least two execution units are provided as two components and a changeover means is provided as a further component, wherein a changeover is made between at least two operating modes in the computer system and a first operating mode corresponds to a comparison mode and a second operating mode corresponds to a performance mode, **characterized in that** the execution units are connected to a bus by the changeover means in the performance mode, and **in that** the execution units are connected to a comparison unit by the changeover means in the comparison mode, and **in that** a mode signal which indicates the currently available operating mode and/or changes in a mode signal is generated in the changeover means, and **in that** at least the changes in the mode signal and/or the mode signal itself are made available outside the changeover means.

2. Method according to Claim 1, **characterized in that** the mode signal and/or the changes in the mode signal are used for monitoring purposes by an available item of information which represents an operating mode being compared with an item of information which is described by the mode signal and/or the changes in the mode signal or derived from the said mode signal and/or changes in the mode signal.

3. Method according to Claim 1, **characterized in that** the mode signal and/or the changes in the mode signal are evaluated in a further component of the computer system.

4. Method according to Claim 1, **characterized in that** the mode signal and/or the changes in the mode signal are evaluated in a component which is peripheral to the execution units.

5. Method according to Claim 1, **characterized in that** the mode signal and/or the changes in the mode signal are evaluated in a memory protection unit (MPU).

6. Method according to Claim 1, **characterized in that** the mode signal and/or the changes in the mode signal are evaluated in an interrupt controller.

7. Method according to Claim 1, **characterized in that** the computer system contains an operating system and the mode signal and/or the changes in the mode signal are used by the operating system for self-monitoring purposes by an item of information which is available in the operating system and represents an operating mode being compared with a item of information which is described by the mode signal and/or the changes in the mode signal or derived from the said mode signal and/or changes in the mode signal.

8. Method according to Claim 1, **characterized in that** the mode signal and/or the changes in the mode signal are verified by at least one additional item of information.

9. Method according to Claim 1, **characterized in that** the mode signal and/or the changes in the mode signal are verified by the mode signal and/or the changes in the mode signal being at least doubled.

10. Method according to Claim 1, **characterized in that** the mode signal and/or the changes in the mode signal are verified in the form of a dual-rail signal.

11. Method according to Claim 1, **characterized in that** a combined changeover and comparison unit is provided as the changeover means, and the mode signal and/or the changes in the mode signal are generated in this changeover and comparison unit.

12. Method according to Claim 1, **characterized in that** the mode signal and/or the changes in the mode signal are generated in at least one execution unit.

13. Method according to Claim 1, **characterized in that** the mode signal and/or the changes in the mode signal are generated in a component which comprises a combined changeover and comparison unit and a unit for identifying a changeover request.

14. Method according to Claim 1, **characterized in that** more than two operating modes between which a changeover can be made are provided.

15. Method according to Claim 1 or 14, **characterized in that** a configurable operating mode identifier is provided for indicating the respective operating mode.

16. Method according to Claim 1 or 14, **characterized in that** a configurable pointer variable is provided for indicating the respective operating mode.

17. Method according to Claim 1, **characterized in that** a fault identification process is carried out on the basis of the mode signal and/or the changes in the mode signal, with at least one fault signal being generated as part of this fault identification process.

18. Method according to one of the preceding claims, **characterized in that** the evaluation of the mode signal is used to demonstrate safety.

19. Method according to one of the preceding claims, **characterized in that** the mode signal has a number of values, in such a way that more than two modes can be described by the mode signal.

20. Method according to Claim 1 or 15, **characterized in that** a voting system is used in a comparison mode.

21. Method according to Claim 1 or 15, **characterized in that** a fault-tolerant algorithm is used in a comparison mode.

22. Changeover apparatus for a computer system having at least two execution units, wherein a changeover is made between at least two operating modes in the computer system and a first operating mode corresponds to a comparison mode and a second operating mode corresponds to a performance mode, **characterized in that** changeover means are provided which connect the execution units to a bus in the performance mode, and **in that** the changeover means connect the execution units to a comparison unit in the comparison mode, and **in that** a mode signal which indicates the currently available operating mode and/or changes in the mode signal is generated in the changeover means, and **in that** the changeover means makes available at least the changes in the mode signal and/or the mode signal itself outside the changeover means.

23. Apparatus according to Claim 22, **characterized in that** the mode signal is generated in such a way that more than two modes can be described by the mode signal.

24. Apparatus according to Claim 22 or 23, **characterized in that** the significance or the interface syntax of the mode signal can be configured.

## Revendications

1. Procédé pour générer un signal dans un système d'ordinateurs à plusieurs composants, selon lequel au moins deux composants sont deux unités d'exécution et un autre composant est un moyen de commutation,
le système d'ordinateur commutant entre au moins deux modes de fonctionnement, et un premier mode de fonctionnement correspond à un mode de comparaison et un second mode de fonctionnement correspond à un mode de performance,
**caractérisé en ce que**
dans le mode de performance, le moyen de commutation relie les unités d'exécution à un bus, et
dans le mode de comparaison, le moyen de commutation relie les unités d'exécution à une unité de comparaison, et
le moyen de commutation génère un signal de mode qui indique le mode de fonctionnement utilisé instantanément et/ou des modifications d'un signal de mode, et
au moins les modifications du signal de mode et/ou le signal de mode lui-même sont fournis à l'extérieur du moyen de commutation.

2. Procédé selon la revendication 1,
**caractérisé en ce que**
le signal de mode et/ou les modifications du signal de mode sont utilisés pour la surveillance **en ce que** l'on compare une information disponible représentant un mode de fonctionnement à une information représentée par le signal de mode et/ou les modifications du signal de mode ou encore une information qui en est déduite.

3. Procédé selon la revendication 1,
**caractérisé en ce qu'**
on exploite le signal de mode et/ ou les modifications du signal de mode dans un autre composant du système d'ordinateurs.

4. Procédé selon la revendication 1,
**caractérisé en ce que**
le signal de mode et/ ou les modifications du signal de mode sont exploités dans l'un des composants correspondant à des unités périphériques.

5. Procédé selon la revendication 1,
**caractérisé en ce que**
le signal de mode et/ou les modifications du signal de mode sont exploités dans une unité de mémoire protégée ((MPU).

6. Procédé selon la revendication 1,
**caractérisé en ce que**
le signal de mode et/ou les modifications du signal de mode sont exploités dans un contrôleur d'interruption.

7. Procédé selon la revendication 1,
**caractérisé en ce que**
le système d'ordinateurs contient un système de gestion et le signal de mode et/ou les modifications du signal de mode sont utilisés pour la surveillance propre du système de gestion **en ce qu'**une information disponible dans le système de gestion et représentant un mode de fonctionnement sera comparée à une information représentée par le signal de mode et/ou les modifications du signal de mode ou encore une information déduite de ces signaux.

8. Procédé selon la revendication 1,
**caractérisé en ce que**
le signal de mode et/ou les modifications du signal de mode sont sécurisés par au moins une information supplémentaire.

9. Procédé selon la revendication 1,
**caractérisé en ce que**
le signal de mode et/ou les modifications du signal de mode sont sécurisés **en ce que** l'on double le signal de mode et/ou les modifications du signal de mode.

10. Procédé selon la revendication 1,
**caractérisé en ce que**
le signal de mode et/ou les modifications du signal de mode sont sécurisés par un signal double rail.

11. Procédé selon la revendication 1,
**caractérisé en ce que**
le moyen de commutation est une unité combinée de commutation et de comparaison, et le signal de mode et/ou les modifications du signal de mode sont générés dans une unité de commutation et de comparaison.

12. Procédé selon la revendication 1,
**caractérisé en ce que**
le signal de mode et/ou les modifications du signal de mode sont générés dans au moins une unité d'exécution.

13. Procédé selon la revendication 1,
**caractérisé en ce que**
le signal de mode et/ou les modifications du signal de mode sont générés dans un composant qui comprend une unité combinée de commutation et de comparaison ainsi qu'une unité de détection de demande de commutation.

14. Procédé selon la revendication 1,
**caractérisé par**
une commutation entre plus de deux modes de fonctionnement.

15. Procédé selon la revendication 1 ou 14,
**caractérisé par**
une référence configurable de modes de fonctionnement pour désigner le mode de fonctionnement respectif.

16. Procédé selon la revendication 1 ou 14,
**caractérisé par**
une variable d'indice configurable pour afficher le mode de fonctionnement respectif.

17. Procédé selon la revendication 1,
**caractérisé en ce qu'**
on effectue une détection d'erreur fondée sur le signal de mode et/ou les modifications du signal de mode, et on génère au moins un signal d'erreur dans le cadre de cette détection d'erreur.

18. Procédé selon les revendications précédentes,
**caractérisé en ce que**
l'exploitation du signal de mode est utilisée pour une preuve de sécurité.

19. Procédé selon les revendications précédentes,
**caractérisé en ce que**
le signal de mode a plusieurs valeurs pour que le signal de mode puisse représenter plus de deux modes.

20. Procédé selon la revendication 1 ou 14,
**caractérisé en ce qu'**
on utilise un vote dans un mode de comparaison.

21. Procédé selon la revendication 1 ou 14,
**caractérisé en ce qu'**
on utilise un algorithme tolérant les erreurs dans un mode de comparaison.

22. Dispositif de commutation pour un système d'ordinateurs ayant au moins deux unités d'exécution, le système d'ordinateurs commutant entre au moins deux modes de fonctionnement et un premier mode de fonctionnement correspond à un mode de comparaison et un second mode de fonctionnement correspond à un mode de performance,
**caractérisé par**
des moyens de commutation qui relient les unités d'exécution à un bus en mode de performance et qui relient les unités d'exécution à une unité de comparaison en mode de comparaison, et
les moyens de commutation génèrent un signal de mode qui indique le mode de fonctionnement présent et/ou les modifications du signal de mode, et
les moyens de commutation fournissent au moins les modifications du signal de mode et/ou du signal de mode lui-même à l'extérieur des moyens de commutation.

23. Dispositif selon la revendication 22,
**caractérisé en ce qu'**
on génère le signal de mode pour qu'il puisse représenter plus de deux modes.

24. Dispositif selon la revendication 22 ou 23,
**caractérisé en ce que**
la signification ou la syntaxe des interfaces du signal de mode sont configurables.
